# EUROPEAN PATENT SPECIFICATION

(11) **EP 3 173 268 B1**
(45) Date of publication and mention of the grant of the patent: **24.06.2020**
(21) Application number: 15825356.7
(22) Date of filing: 17.07.2015
(51) Int. Cl.: B60H 1/22, B60H 1/08, F25B 27/02, F25B 47/02

(54) **REFRIGERATION CYCLE DEVICE**
KÄLTEKREISLAUFVORRICHTUNG
DISPOSITIF DE CYCLE FRIGORIFIQUE

(30) Priority: 23.07.2014 JP 2014150103; 02.07.2015 JP 2015133794
(43) Date of publication of application: 31.05.2017
(73) Proprietor: Denso Corporation, Kariya-shi, Aichi 448-8661 (JP)
(72) Inventor: FUJITA, Akira, Kariya-city Aichi 448-8661 (JP); TANIGUCHI, Masami, Kariya-city Aichi 448-8661 (JP); TAKIZAWA, Ryo, Kariya-city Aichi 448-8661 (JP); KURATA, Takehiro, Kariya-city Aichi 448-8661 (JP)
(74) Representative: TBK
(86) International application number: PCT/JP2015/003617
(87) International publication number: WO 2016/013194

(56) References cited:
- WO-A1-2014/091548
- JP-A- 2005 090 784
- JP-A- 2014 088 060
- US-A1- 2011 016 896
- US-A1- 2013 081 419

## Description

### CROSS REFERENCE TO RELATED APPLICATION

### TECHNICAL FIELD

The present disclosure relates to a refrigeration cycle device that includes a refrigeration cycle device configuring multiple heat pumps and multiple water-refrigerant heat exchangers, and transfers a heat absorbed from an air by one heat pump to another heat pump through a hot water circuit so as to leverage the heat for defrosting operation in the another heat pump.

### BACKGROUND ART

Patent Document 1 of a conventional art discloses a device having multiple refrigeration cycle circuits. An object of the device is to provide a heat pump device capable of defrosting while continuing the supply of the heat, and also capable of suppressing a variation in the supply amount of the heat even if the defrosting is executed. For that reason, the device provides the heat pump device capable of allowing another refrigeration cycle circuit to increase the supply amount of the heat when one refrigeration cycle circuit performs the defrosting operation. However, in the conventional art, the heat of the multiple refrigeration cycle circuits and the heat of the hot water circuit cannot be effectively leveraged, and a defrosting time may become relatively long.

A further prior art document WO 2014/091548 A1 discloses an air-conditioning hot-water supply composite system, in which a control device is provided, which controls a bypass solenoid valve and a hot-water supply throttling means during a defrosting operation on the basis of two different temperatures, namely temperatures on a refrigerant inlet side of a refrigerant-heat medium heat exchanger.

In particular, WO 2014/091548 A1 discloses a refrigeration cycle device comprising: a first refrigeration cycle circuit including a first exterior heat exchanger; a second refrigeration cycle circuit including a second exterior heat exchanger; a heat source coolant circuit including a heat source and a heater core that cools the heat source and heats an air-conditioning air to be blown into a vehicle interior; a control device which is configured to control an operation of the first refrigeration cycle circuit, an operation of the second refrigeration cycle circuit, and an operation of the heat source coolant circuit; a first water-refrigerant heat exchanger arranged to perform a heat exchange between a coolant flowing in the heat source coolant circuit and a refrigerant flowing in the first refrigeration cycle circuit; and a second water-refrigerant heat exchanger arranged to perform a heat exchange between the coolant flowing in the heat source coolant circuit and the refrigerant flowing in the second refrigeration cycle circuit, wherein the first refrigeration cycle circuit forms a heat pump that pumps heat from air through the first exterior heat exchanger, the second refrigeration cycle circuit forms a heat pump [that pumps heat from air through the first exterior heat exchanger], and the control device includes: a first flow rate control unit which is configured to compare a temperature of a coolant in the heat source coolant circuit with a temperature of a high-pressure gas refrigerant flowing in the first refrigeration cycle circuit when the first refrigeration cycle circuit performs a defrosting operation for defrosting in the first exterior heat exchanger, the first flow rate control unit being configured for controlling the heat source coolant circuit to cause the coolant of the heat source coolant circuit to flow in the first water-refrigerant heat exchanger when the control device determines that the first refrigeration cycle circuit is capable of absorbing heat; and a second flow rate control unit which is configured to compare the temperature of the coolant in the heat source coolant circuit with a temperature of a high-pressure gas refrigerant flowing in the second refrigeration cycle circuit when the second refrigeration cycle circuit performs a defrosting operation for defrosting in the second exterior heat exchanger, the second flow rate control unit being configured for controlling the heat source coolant circuit to cause the coolant of the heat source coolant circuit to flow in the second water-refrigerant heat exchanger when the control device determines that the second refrigeration cycle circuit is capable of absorbing heat.

### PRIOR ART DOCUMENT

### PATENT DOCUMENT

Patent Document 1 : JP 2013-231522 A

### SUMMARY

It is an object of the present disclosure to provide a refrigeration cycle device having multiple refrigeration cycle circuits and a hot water circuit, in which a heat absorbed by a first refrigeration cycle circuit is leveraged for defrosting of a second refrigeration cycle circuit through the hot water circuit, thereby being capable of improving a defrosting efficiency and reducing a defrosting time.

This problem is solved by means of a refrigeration cycle device with the features of claim 1. Preferred forms of realization of the invention are defined in the dependent claims.

According to an aspect of the present disclosure, a refrigeration cycle device includes, a first refrigeration cycle circuit, a second refrigeration cycle circuit, a heat source coolant circuit including a heater core that cools a heat source and heats an air-conditioning air to be blown into a vehicle interior, a control device that controls an operation of the first refrigeration cycle circuit, an operation of the second refrigeration cycle circuit, and an operation of the heat source coolant circuit, a first water-refrigerant heat exchanger that performs a heat exchange between a coolant flowing in the heat source coolant circuit and a refrigerant flowing in the first refrigeration cycle circuit, and a second water-refrigerant heat exchanger that performs a heat exchange between the coolant flowing in the heat source coolant circuit and the refrigerant flowing in the second refrigeration cycle circuit. The first refrigeration cycle circuit forms a heat pump that pumps heat from air through a first exterior heat exchanger. The second refrigeration cycle circuit forms a heat pump that pumps heat from air through a second exterior heat exchanger. The control device includes a first flow rate control unit that compares a temperature of a coolant in the heat source coolant circuit with a temperature of a high-pressure gas refrigerant flowing in the first refrigeration cycle circuit when the first refrigeration cycle circuit performs a defrosting operation for defrosting in the first exterior heat exchanger. The first flow rate control unit controls the heat source coolant circuit to cause the coolant of the heat source coolant circuit to flow in the first water-refrigerant heat exchanger when the control device determines that the first refrigeration cycle circuit is capable of absorbing heat. The control device includes a second flow rate control unit that compares the temperature of the coolant in the heat source coolant circuit with a temperature of a high-pressure gas refrigerant flowing in the second refrigeration cycle circuit when the second refrigeration cycle circuit performs a defrosting operation for defrosting in the second exterior heat exchanger. The second flow rate control unit controls the heat source coolant circuit to cause the coolant of the heat source coolant circuit to flow in the second water-refrigerant heat exchanger when the control device determines that the second refrigeration cycle circuit is capable of absorbing heat.

According to the above configuration, when the first refrigeration cycle circuit is put into the defrosting operation for defrosting in the exterior heat exchanger, the temperature of the coolant in the heat source coolant circuit is compared with the temperature of the high-pressure gas refrigerant flowing in the first refrigeration cycle circuit. If it is determined that the first refrigeration cycle circuit can absorb the heat, since the coolant of the heat source coolant circuit is allowed to flow in the first water-refrigerant heat exchanger, the defrosting efficiency of the exterior heat exchanger in the first refrigeration cycle circuit can be improved with the use of the heat of the heat source coolant circuit, and the defrosting time can be reduced. With the second water-refrigerant heat exchanger, the heat exchange is performed between the second refrigeration cycle circuit and the coolant, and a reduction in the temperature of the coolant can be suppressed.

In addition, when the second refrigeration cycle circuit is put into the defrosting operation for defrosting in the exterior heat exchanger, the temperature of the coolant in the heat source coolant circuit is compared with a discharge temperature of the high-pressure gas refrigerant flowing in the second refrigeration cycle circuit. If it is determined that the second refrigeration cycle circuit can absorb the heat, since the coolant of the heat source coolant circuit is allowed to flow in the second water-refrigerant heat exchanger, the defrosting efficiency of the exterior heat exchanger in the second refrigeration cycle circuit can be improved with the use of the heat of the heat source coolant circuit, and the defrosting time can be reduced. Further, with the first water-refrigerant heat exchanger, the heat exchange is performed between the first refrigeration cycle circuit and the coolant, and a reduction in the temperature of the coolant can be suppressed.

According to another aspect of the present disclosure, a refrigeration cycle device includes a first refrigeration cycle circuit, a second refrigeration cycle circuit, a heat source coolant circuit including a heater core that cools a heat source and heats an air-conditioning air to be blown into a vehicle interior, a first water-refrigerant heat exchanger that performs a heat exchange between a coolant flowing in the heat source coolant circuit and a refrigerant flowing in the first refrigeration cycle circuit, a second water-refrigerant heat exchanger that performs a heat exchange between the coolant flowing in the heat source coolant circuit and the refrigerant flowing in the second refrigeration cycle circuit, an independent coolant circuit in which the coolant is capable of circulating through the first water-refrigerant heat exchanger and the second water-refrigerant heat exchanger separately and independently from the heat source coolant circuit, an independent water pump that circulates the coolant in the independent coolant circuit when the independent coolant circuit is separated and independent from the heat source coolant circuit, a switching valve that controls a flow of the coolant flowing from the heat source coolant circuit into the independent coolant circuit and is capable of separating the independent coolant circuit from the heat source coolant circuit, and a control device that controls an operation of the first refrigeration cycle circuit, an operation of the second refrigeration cycle circuit, an operation of the heat source coolant circuit, an operation of the independent water pump, and an operation of the switching valve. The first refrigeration cycle circuit forms a heat pump that pumps heat from air through a first exterior heat exchanger. The second refrigeration cycle circuit forms a heat pump that pumps heat from air through a second exterior heat exchanger. The control device compares a temperature of the coolant in the heat source coolant circuit with a temperature of a high-pressure gas refrigerant flowing in the first refrigeration cycle circuit when the first refrigeration cycle circuit performs a defrosting operation for defrosting in the first exterior heat exchanger, and the control device controls the operation of the switching valve to separate the independent coolant circuit from the heat source coolant circuit, and controls the operation of the independent water pump to pump the coolant of the independent coolant circuit to the first water-refrigerant heat exchanger when the control device determines that the first refrigeration cycle circuit is capable of absorbing heat.

According to the above configuration, the heat of the refrigerant from another refrigeration cycle circuit can be supplied to the refrigeration cycle circuit that performs the defrosting operation by the independent coolant circuit connecting the first water-refrigerant heat exchanger and the second water-refrigerant heat exchanger. Therefore, the defrosting efficiency of the first exterior heat exchanger and the second exterior heat exchanger can be improved, and the defrosting time can be reduced. In addition, since the independent coolant circuit and the heat source coolant circuit are separated from each other to allow the coolant to flow, there is no case in which the temperature of the coolant in the heat source coolant circuit that passes through the heat source is extremely reduced. The heating performance by the heater core is not extremely reduced.

### BRIEF DESCRIPTION OF THE DRAWINGS

FIG. 1 is a schematic diagram illustrating a refrigeration cycle device according to a first embodiment of the present disclosure.
FIG. 2 is a diagram illustrating the control of electronic expansion valves and electromagnetic valves in the refrigeration cycle device according to the first embodiment.
FIG. 3 is a flowchart illustrating a defrosting operation control of the refrigeration cycle device according to the first embodiment.
FIG. 4 is a flowchart illustrating a control of a flow rate control valve when a first refrigeration cycle circuit of the refrigeration cycle device performs the defrosting operation according to the first embodiment.
FIG. 5 is a flowchart illustrating a control of the flow rate control valve when a second refrigeration cycle circuit of the refrigeration cycle device performs the defrosting operation according to the first embodiment.
FIG. 6 is a schematic diagram illustrating a parallel flow channel in a refrigeration cycle device according to a second embodiment of the present disclosure.
FIG. 7 is a schematic diagram illustrating a first series flow channel in the refrigeration cycle device according to the second embodiment.
FIG. 8 is a schematic diagram illustrating a second series flow channel in the refrigeration cycle device according to the second embodiment.
FIG. 9 is a flowchart illustrating a switching control between the parallel flow channel and the first series flow channel in the defrosting operation control of the refrigeration cycle device according to the second embodiment.
FIG. 10 is a flowchart illustrating a switching control between the parallel flow channel and the second series flow channel in the defrosting operation control of the refrigeration cycle device according to the second embodiment.
FIG. 11 is a schematic diagram illustrating a first series body flow channel of a refrigeration cycle device according to a third embodiment of the present disclosure.
FIG. 12 is a schematic diagram illustrating a second series body flow channel of the refrigeration cycle device according to the third embodiment.
FIG. 13 is a schematic diagram illustrating a pseudo-parallel flow channel provision control of the refrigeration cycle device according to the third embodiment.
FIG. 14 is a flowchart illustrating the pseudo-parallel flow channel provision control of the refrigeration cycle device according to the third embodiment.
FIG. 15 is a schematic diagram illustrating a refrigeration cycle device according to a fourth embodiment of the present disclosure.
FIG. 16 is a flowchart illustrating a defrosting operation control of the refrigeration cycle device according to the fourth embodiment.
FIG. 17 is a flowchart illustrating a control of the flow rate control valve when a second refrigeration cycle circuit of the refrigeration cycle device performs the defrosting operation according to the fourth embodiment.
FIG. 18 is a flowchart illustrating a control of the flow rate control valve when a first refrigeration cycle circuit of the refrigeration cycle device performs the defrosting operation according to the fourth embodiment.
FIG. 19 is a schematic diagram illustrating a refrigeration cycle device according to a fifth embodiment of the present disclosure.
FIG. 20 is a flowchart illustrating the control of the refrigeration cycle device according to the fifth embodiment.
FIG. 21 is a schematic diagram illustrating a refrigeration cycle device according to a sixth embodiment of the present disclosure.
FIG. 22 is a schematic diagram illustrating a module in a bus ceiling of the refrigeration cycle device according to the sixth embodiment.
FIG. 23 is a schematic diagram illustrating a refrigeration cycle device according to a seventh embodiment of the present disclosure.

### DESCRIPTION OF EMBODIMENTS

Hereinafter, multiple embodiments for implementing the present invention will be described referring to drawings. In the respective embodiments, a part that corresponds to a matter described in a preceding embodiment may be assigned the same reference numeral, and redundant explanation for the part may be omitted. When only a part of a configuration is described in an embodiment, another preceding embodiment may be applied to the other parts of the configuration.

### (First Embodiment)

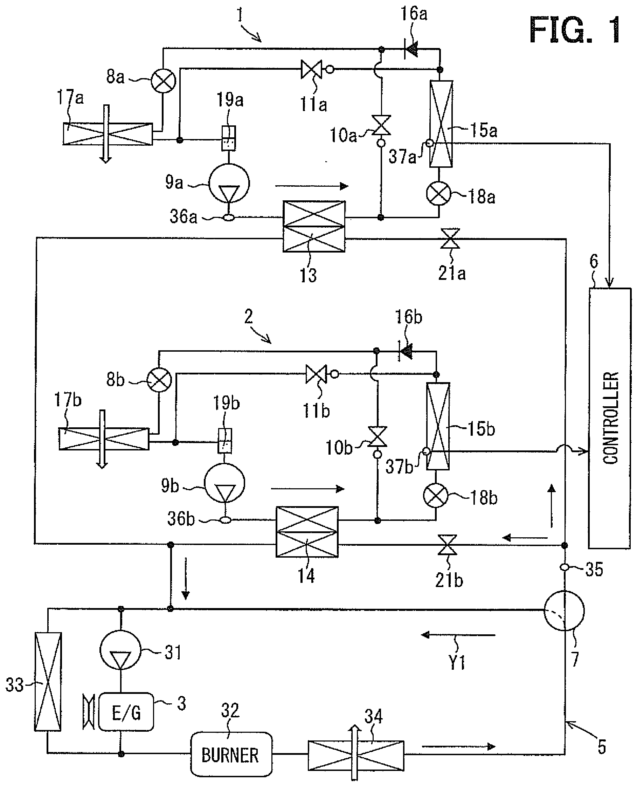

Hereinafter, a first embodiment of the present disclosure will be described in detail with reference to FIG. 1 to FIG. 5. A configuration of a refrigeration cycle device according to the first embodiment of the present disclosure will be described with reference to FIG. 1. A vehicle air conditioning apparatus includes a hot water circuit 5 (heat source coolant circuit) that cools a first refrigeration cycle circuit 1, a second refrigeration cycle circuit 2, and a heat source 3, and a control device 6 that controls the first refrigeration cycle circuit 1, the second refrigeration cycle circuit 2, and the hot water circuit 5.

The control device 6 controls a switching valve 7 formed of a three-way valve, and first electronic expansion valves 8a, 8b, compressors 9a, 9b, first electromagnetic valves 10a, 10b, and second electromagnetic valves 11a, 11b in the first refrigeration cycle circuit 1 and the second refrigeration cycle circuit 2. However, in the case, a control signal transmitted from the control device 6 is omitted from an illustration. The switching valve 7 functions as a function of bypassing a first water-refrigerant heat exchanger 13 and a second water-refrigerant heat exchanger 14 to allow a hot water (an example of coolant) of the hot water circuit 5 to flow as indicated by an arrow Y1.

Further, the first refrigeration cycle circuit 1 and the second refrigeration cycle circuit 2 include a first water-refrigerant heat exchanger 13 that performs a heat exchange between the hot water circuit 5 and the first refrigeration cycle circuit 1 and a second water-refrigerant heat exchanger 14 that performs the heat exchange between the hot water circuit 5 and the second refrigeration cycle circuit 2.

The hot water circuit 5 has an engine as the heat source 3. The hot water circuit 5 includes an engine that is mounted in the vehicle and functions as the heat source 3, and a water pump 31 that circulates an engine coolant. In addition, the hot water circuit 5 includes a burner 32 that combusts a fuel and raises a temperature of the hot water, a radiator 33 that radiates the temperature of the hot water toward an outside air, and a heater core 34 that performs the heat exchange between the hot water and an air-conditioning air directed toward the vehicle interior. The first refrigeration cycle circuit 1 and the second refrigeration cycle circuit 2 form heat pumps that pump the heat from air through a first exterior heat exchanger 15a and a second exterior heat exchanger 15b, respectively. In the first exterior heat exchanger 15a and the second exterior heat exchanger 15b, a heat exchange is performed between the refrigerant and the outside air.

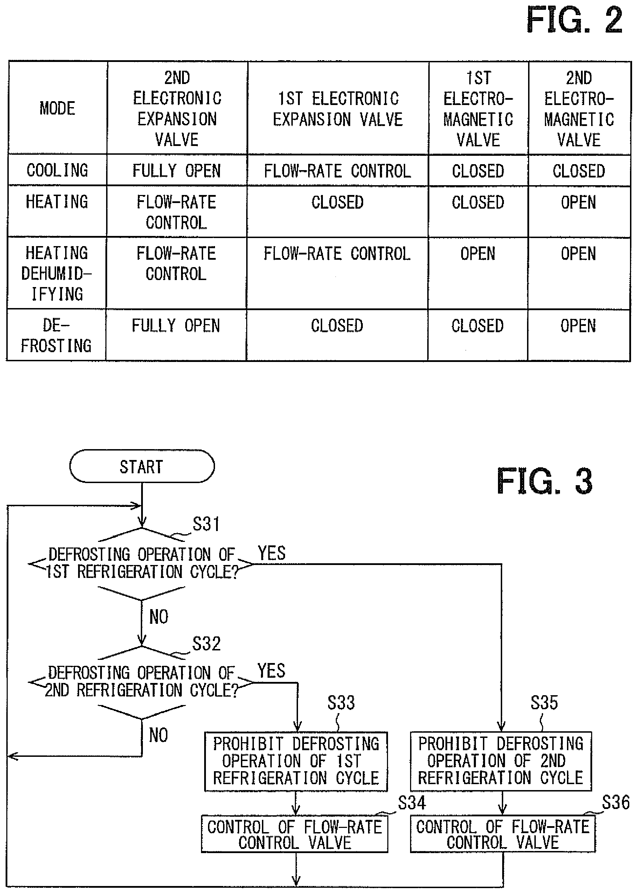

FIG. 2 is a table showing the control of electronic expansion valves and so on by the control device 6. The actuation of the first electromagnetic valves 10a, 10b and the second electromagnetic valves 11a, 11b in FIG. 1 will be described. Each of the first refrigeration cycle circuit 1 and the second refrigeration cycle circuit 2 has the following four modes.

In a cooling mode, the heat is radiated by the water-refrigerant heat exchangers 13, 14, the first exterior heat exchanger 15a, and the second exterior heat exchanger 15b, and the heat is absorbed by the interior heat exchangers (that is, a first interior heat exchanger 17a, a second interior heat exchanger 17b). In order to achieve the above operation, second electronic expansion valves 18a and 18b are fully opened, and the first electronic expansion valves 8a and 8b control the flow rates to control the temperatures of the interior heat exchangers 17a and 17b that function as evaporators. The first electromagnetic valves 10a and 10b are closed, and the second electromagnetic valves 11a and 11b are closed.

In a heating mode, the heat is radiated by the water-refrigerant heat exchangers 13 and 14, and the heat is absorbed by the first exterior heat exchanger 15a and the second exterior heat exchanger 15b. In order to achieve the above operation, the second electronic expansion valves 18a and 18b control the flow rates and control the temperatures of the first exterior heat exchanger 15a and the second exterior heat exchanger 15b that function as evaporators. The first electronic expansion valves 8a and 8b may be opened or closed. In other words, the open and closed states of the first electronic expansion valves 8a and 8b are irrelevant to the heating mode, but closed in the present embodiment. The first electromagnetic valves 10a and 10b are closed, and the second electromagnetic valves 11a and 11b are opened.

In a heating dehumidifying mode, the heat is radiated by the water-refrigerant heat exchangers 13 and 14, and the heat is absorbed by the first exterior heat exchanger 15a, the second exterior heat exchanger 15b, and the interior heat exchangers 17a and 17b. In order to achieve the above operation, the second electronic expansion valves 18a and 18b control the flow rates, and control the temperatures of the first exterior heat exchanger 15a and the second exterior heat exchanger 15b which function as the evaporators. The first electronic expansion valves 8a and 8b also control the flow rate. The first electromagnetic valves 10a and 10b are opened. The second electromagnetic valves 11a and 11b are also opened.

In a defrosting mode, the heat is absorbed or nothing is performed by the water-refrigerant heat exchangers 13 and 14, and the heat is radiated by the first exterior heat exchanger 15a and the second exterior heat exchanger 15b. In order to achieve the above operation, the second electronic expansion valves 18a and 18b are fully opened. The first electronic expansion valves 8a and 8b may be opened or closed, but closed in the present embodiment. The first electromagnetic valves 10a and 10b are closed. The second electromagnetic valves 11a and 11b are opened.

A circuit of the compressors 9a, 9b, the water-refrigerant heat exchangers 13, 14, the first electromagnetic valves 10a, 10b, (check valve potions), the second electromagnetic valves 11a, 11b, accumulators 19a, 19b, and the compressors 9a, 9b are unavoidably formed without the provision of check valves 16a and 16b. Hence, in order to prevent unnecessary circuits from being formed in the heating dehumidifying mode, the check valves 16a and 16b are provided.

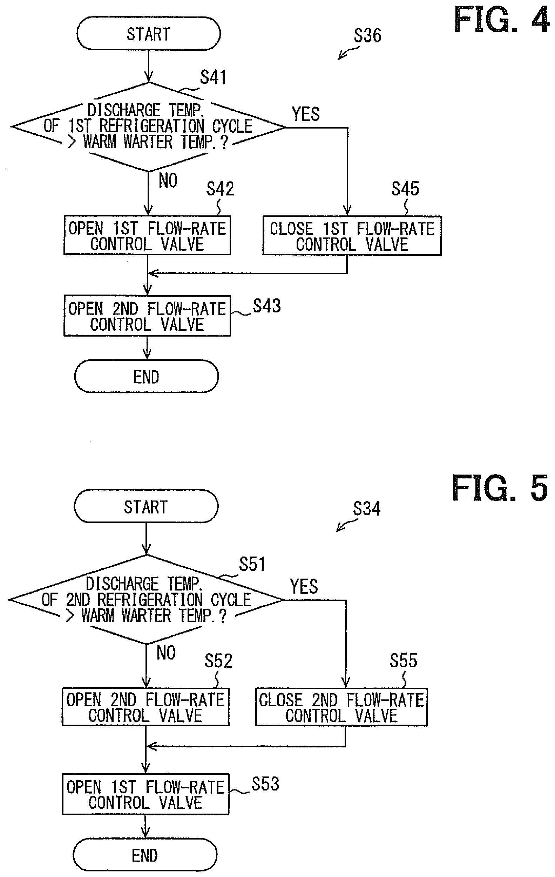

FIGS. 3 and 4 illustrate an example of a flowchart of a control to be executed in the control device 6 of FIG. 1. Referring to FIG. 3, in the control device 6, in the heating mode, a first refrigeration cycle circuit 1 of one refrigeration cycle in multiple refrigeration cycle circuits performs defrosting operation for defrosting in the first exterior heat exchanger 15a. In this situation, the defrosting operation of the second refrigeration cycle circuit 2 of another refrigeration cycle is prohibited.

For example, heating operation is started when a vehicle interior temperature falls below a predetermined value during an on-state of an air conditioner switch in an automatic air conditioner operation, or when a heating switch is turned on in a manual air conditioner operation. Then, in Step S31, it is determined whether the first refrigeration cycle circuit 1 is in defrosting operation, or not. If yes, the defrosting operation in the second refrigeration cycle circuit 2 is prohibited in Step S35. In other words, the heating operation of the second refrigeration cycle circuit 2 is continued. The control proceeds to Step S36.

The details of Step S36 are illustrated in FIG. 4. In Step S41, a temperature of a hot water in the hot water circuit 5 is compared with a discharge temperature (that is, a temperature of a high-pressure gas refrigerant) of the high-temperature and high-pressure refrigerant discharged from the compressor 9a of the first refrigeration cycle circuit 1, the temperature of the hot water may be higher, and the determination may be negative in Step S41.

In this situation, it is determined that the first refrigeration cycle circuit 1 side is in a state where the heat can be absorbed. In that case, in Step S42, a first flow rate control valve 21 a (FIG. 1) is opened so that the hot water in the hot water circuit 5 flows in the water-refrigerant heat exchanger 13. The first flow rate control valve 21a is controlled by a first flow rate control unit (Step S42).

Conversely, if it is determined that the temperature of the hot water is relatively low, and the refrigerant discharge temperature of the first refrigeration cycle circuit 1 is higher than the temperature of the hot water in Step S41 (yes), the control proceeds to Step S45. The first flow rate control valve 21a is closed so that the hot water in the hot water circuit 5 does not flow in the first water-refrigerant heat exchanger 13. After Step S42 and Step S45, a second flow rate control valve 21b is opened in Step S43. The second flow rate control valve 21b is controlled by a second flow rate control unit (Step S52).

According to the above configuration, when one refrigeration cycle circuit 1 puts into the defrosting operation for defrosting in the exterior heat exchanger, a temperature of the hot water in the hot water circuit 5 is compared with a discharge temperature of the refrigerant flowing in one refrigeration cycle circuit 1. As a result, if it is determined that one refrigeration cycle circuit 1 side is in a state where the heat can be absorbed, the hot water in the hot water circuit 5 is allowed to flow in one first water-refrigerant heat exchanger 13.

For that reason, the defrosting efficiency of the first exterior heat exchanger 15a in one refrigeration cycle circuit 1 is improved with the use of the heat of the hot water circuit 5, thereby being capable of reducing the defrosting time. Because the other refrigeration cycle circuit 2 does not perform the defrosting operation, the second flow rate control valve 21b is opened in Step S43. The heat of the refrigerant can be transferred to the hot water circuit 5 through the second water-refrigerant heat exchanger 14.

In the heating mode, when the other refrigeration cycle circuit 2 in the multiple refrigeration cycle circuits puts into the defrosting operation for defrosting in the second exterior heat exchanger 15b, the control device 6 prohibits the defrosting operation of one refrigeration cycle circuit 1.

In order to achieve the above operation, in Step S32 of FIG. 3, it is determined whether the second refrigeration cycle circuit 2 is in the defrosting operation, or not. If yes, the defrosting operation in the first refrigeration cycle circuit 1 is prohibited in Step S33. In other words, the heating operation of the first refrigeration cycle circuit 1 is continued. The control proceeds to Step S34.

The details of Step S34 are illustrated in FIG. 5. In Step S51, the temperature of the hot water in the hot water circuit 5 is compared with the discharge temperature (that is, the temperature of the high-pressure gas refrigerant) of the high-temperature and high-pressure refrigerant discharged from the compressor 9b of the second refrigeration cycle circuit 2. If the temperature of the hot water is high, and the determination result is no in Step S51, it is determined that the second refrigeration cycle circuit 2 side is in a state where the heat can be absorbed, and the second flow rate control valve 21 b is opened so that the hot water in the hot water circuit 5 flows in the second water-refrigerant heat exchanger 14 in Step S52.

Conversely, in Step S51, it may be determined that the temperature of the hot water is relatively low, and the refrigerant discharge temperature of the second refrigeration cycle circuit 2 is higher than the temperature of the hot water (yes). In that case, the control proceeds to Step S55, and the second flow rate control valve 21b is closed so that the hot water in the hot water circuit 5 does not flow in the second water-refrigerant heat exchanger 14. After Step S55, the first flow rate control valve 21a is opened in Step S53.

When, as illustrated in FIG. 4, the first refrigeration cycle circuit 1 puts into the defrosting operation for defrosting in the first exterior heat exchanger 15a, the opening degree of the second flow rate control valve 21b that allows the hot water to flow into the second water-refrigerant heat exchanger 14 is fully opened in the second refrigeration cycle circuit 2 side (Step S43). As a result, the hot water circuit 5 and the second water-refrigerant heat exchanger 14 perform the heat exchange. For that reason, a temperature of the hot water is maintained for heating, and the heat pumped by the second exterior heat exchanger 15b of the other second refrigeration cycle circuit 2 can be transferred to one first refrigeration cycle circuit 1 through the hot water circuit 5.

Hence, the defrosting efficiency is improved with the use of the heat absorbed from the air by the other second refrigeration cycle circuit 2 and the heat absorbed from the hot water for the defrosting of one first refrigeration cycle circuit 1 through the hot water circuit 5, thereby being capable of reducing the defrosting time.

The hot water circuit 5 includes a circuit for cooling the engine configuring the heat source 3 mounted in the vehicle. The hot water circuit 5 includes the engine configuring the heat source 3, the water pump 31 that circulates the hot water for cooling the engine, the first water-refrigerant heat exchanger 13, the second water-refrigerant heat exchanger 14, and the burner 32 that combusts the fuel to raise the temperature of the hot water. In addition, the hot water circuit 5 includes the radiator 33, the heater core 34, and the first flow rate control valve 21a and the second flow rate control valve 21 b for adjusting the flow rates of the hot waters flowing into the first water-refrigerant heat exchanger 13 and the second water-refrigerant heat exchanger 14, respectively.

The radiator 33 radiates the heat toward the outside air when the temperature of the hot water rises more than necessary. The heater core 34 cools the heat source 3 and heats the air-conditioning air blown into the vehicle interior. Incidentally, the first flow rate control valve 21a and the second flow rate control valve 21b can be configured by the use of not a valve capable of finely adjusting the opening degree but a known on/off valve that is intermittently turned on/off. When the flow rate is increased, an on-period may be prolonged.

The first refrigeration cycle circuit 1 and the second refrigeration cycle circuit 2 include the compressors 9a, 9b, the interior heat exchangers 17a and 17b, the first exterior heat exchanger 15a and the second exterior heat exchanger 15b, and the first electronic expansion valves 8a, 8b, respectively. High-pressure refrigerants are allowed to flow in the first water-refrigerant heat exchanger 13 and the second water-refrigerant heat exchanger 14 in which the hot water in the hot water circuit 5 flows. In other words, the first water-refrigerant heat exchanger 13 is disposed between a discharge port of the compressor 9a and the first exterior heat exchanger 15a, and the second water-refrigerant heat exchanger 14 is disposed between a discharge port of the compressor 9b and the second exterior heat exchanger 15b.

At the time of heating, the first exterior heat exchanger 15a and the second exterior heat exchanger 15b perform the heat exchange with the air outside of the vehicle. According to this configuration, the heat of the refrigerant from the multiple refrigeration cycle circuits 1 and 2 can heat the hot water in the hot water circuit 5 through the first water-refrigerant heat exchanger 13 and the second water-refrigerant heat exchanger 14. In addition, the first refrigeration cycle circuit 1 and the second refrigeration cycle circuit 2 include the check valves 16a and 16b for preventing the refrigerant from flowing back, the first electromagnetic valves 10a and 10b, the second electromagnetic valves 11a and 11b, and accumulators 19a, 19b that accumulate the excessive refrigerant.

Further, the first refrigeration cycle circuit 1 and the second refrigeration cycle circuit 2 include a hot water temperature sensor 35, discharge temperature sensors 36a, 36b for detecting the discharge temperature, and defrosting determination sensors 37a, 37b for detecting temperatures of heat exchange fins of the first exterior heat exchanger 15a and the second exterior heat exchanger 15b, respectively. Signals from those sensors are connected to the control device 6. The hot water temperature sensor 35 measures the temperature of the hot water flowing in the first water-refrigerant heat exchanger 13 and the second water-refrigerant heat exchanger 14. The discharge temperature sensors 36a and 36b detect the discharge temperature of the refrigerant discharged from the compressors 9a and 9b, respectively.

In the case where the first refrigeration cycle circuit is in the defrosting operation as illustrated in FIG. 4, if the discharge temperature of the first refrigeration cycle circuit 1 is higher than the temperature of the hot water, the first flow rate control valve 21a is closed by the first flow rate control unit (Step S42). With the above configuration, the hot water low in temperature does not receive the heat from the first refrigeration cycle circuit 1.

If the discharge temperature of the first refrigeration cycle circuit 1 is not higher than the temperature of the hot water, the first flow rate control valve 21a is opened in Step S42. With the above configuration, the hot water transfers the heat to the first refrigeration cycle circuit 1. Thereafter, the second flow rate control valve 21b is opened in Step S43. With this operation, the hot water receives the heat from the second refrigeration cycle circuit 2.

As illustrated in FIG. 5, in the case where the second refrigeration cycle circuit 2 is in the defrosting operation, if the discharge temperature of the second refrigeration cycle circuit is higher than the temperature of the hot water, the second flow rate control valve 21b is closed in Step S55. With this operation, the hot water low in the temperature does not receive the heat from the second refrigeration cycle circuit 2.

If the discharge temperature of the second refrigeration cycle circuit 2 is not higher than the temperature of the hot water, the second flow rate control valve 21b is opened in Step S52. With this operation, the hot water transfers the heat to the second refrigeration cycle circuit 2. Thereafter, the first flow rate control valve 21a is opened. As a result, the hot water can receive the heat from the first refrigeration cycle circuit 1.

In the case where the first refrigeration cycle circuit 1 is in a defrosting mode, the second refrigeration cycle circuit 2 is in the heating operation. For that reason, in general, the refrigerant discharge temperature of the second refrigeration cycle circuit 2 becomes higher than the temperature of the hot water after the heater core 34.

In an opposite case caused by the action of the burner 32, a portion in which the heat is radiated is eliminated on the second refrigeration cycle circuit 2 side, the refrigerant discharge temperature rises, and the refrigerant discharge temperature becomes higher than the temperature of the hot water eventually. As usual, when the temperature of the hot water is higher than a predetermined temperature, the burner 32 is stopped.

Next, the effects of the first embodiment will be described. In the first embodiment, when the first refrigeration cycle circuit 1 puts into the defrosting operation for defrosting in the first exterior heat exchanger 15a, the temperature of the hot water in the hot water circuit 5 is compared with the discharge temperature of the refrigerant flowing in the first refrigeration cycle circuit 1 as illustrated in FIG. 4. If it is determined that the first refrigeration cycle circuit 1 is in a state where the heat can be absorbed, the hot water in the hot water circuit 5 is allowed to flow in the first water-refrigerant heat exchanger 13 by the aid of the first flow rate control valve 21a. Hence, the defrosting efficiency of the first exterior heat exchanger 15a in the first refrigeration cycle circuit 1 is improved with the use of the heat in the hot water circuit 5, thereby being capable of reducing the defrosting time.

Also, when the second refrigeration cycle circuit 2 puts into the defrosting operation for defrosting in the exterior heat exchanger 15b, the temperature of the hot water in the hot water circuit 5 is compared with the discharge temperature of the refrigerant flowing into the second refrigeration cycle circuit 2 as illustrated in FIG. 5. If it is determined that the second refrigeration cycle circuit 2 is in the state where the heat can be absorbed, the hot water in the hot water circuit 5 is allowed to flow into the second water-refrigerant heat exchanger 14 by the aid of the second flow rate control valve 21b. Hence, the defrosting efficiency of the second exterior heat exchanger 15b in the second refrigeration cycle circuit 2 is improved with the use of the heat of the hot water circuit 5, thereby being capable of reducing the defrosting time.

Further, when one refrigeration cycle circuit 1 puts into the defrosting operation for defrosting in the first exterior heat exchanger 15a, the opening degree of the second flow rate control valve 21b that allows the hot water to flow into the second water-refrigerant heat exchanger 14 is opened in the other refrigeration cycle circuit 2. Therefore, a temperature of the hot water is maintained for heating, and the heat pumped by the second exterior heat exchanger 15b of the other refrigeration cycle circuit 2 can be transferred to one refrigeration cycle circuit 1 through the hot water circuit 5 and the first water-refrigerant heat exchanger 13. Hence, the defrosting efficiency is improved with the use of the heat absorbed from the air by the other refrigeration cycle circuit 2 and the heat absorbed from the hot water for the defrosting of one refrigeration cycle circuit 1 through the hot water circuit 5, thereby being capable of reducing the defrosting time.

The heating in the vehicle interior and the respective defrosting in the multiple refrigeration cycle circuits can be efficiently performed with the use of the heat generated by the engine. When the temperature of the hot water is low, the hot water can be heated by the burner 32. Also, since the hot water circuit 5 is frequently installed on a lower portion of the vehicle together with the engine, feet can be heated by the heater core 34.

Also, the heat of the refrigerant from the first refrigeration cycle circuit 1 and the second refrigeration cycle circuit 2 is transferred to the first water-refrigerant heat exchanger 13 and the second water-refrigerant heat exchanger 14, and in addition, the hot water in the hot water circuit 5 can be heated through the first water-refrigerant heat exchanger 13 and the second water-refrigerant heat exchanger 14 in which the hot water flows.

Further, since the hot water temperature sensor 35 measures the temperature at a position upstream of diverging into the first water-refrigerant heat exchanger 13 and the second water-refrigerant heat exchanger 14, the number of sensors can be reduced.

In the case where the first refrigeration cycle circuit 1 is in the defrosting operation, as illustrated in FIG. 4, if the discharge temperature of the first refrigeration cycle circuit 1 is higher than the temperature of the hot water, the first flow rate control valve 21a is closed to prevent the heat transfer between the hot water low in temperature and the first refrigeration cycle circuit. Hence, the above configuration does not adversely affect the defrosting of the first refrigeration cycle circuit 1. As a result, the refrigerant temperature of the exterior heat exchanger for defrosting can be prevented from being decreased by the heat transfer, and the defrosting time can be prevented from being prolonged. In this situation, the heat is transferred to the hot water from the second refrigeration cycle circuit 2 side by opening the second flow rate control valve 21b so as to maintain the heating performance.

Further, in the case where the second refrigeration cycle circuit 2 is in the defrosting operation, if the discharge temperature of the second refrigeration cycle circuit 2 is higher than the temperature of the hot water as illustrated in FIG. 5, the second flow rate control valve 21b is closed, and the heat transfer between the hot water low in temperature and the second refrigeration cycle circuit is prevented. For that reason, the heat can be prevented from being transferred from the second refrigeration cycle circuit 2 side to the hot water side. As a result, the refrigerant temperature of the second exterior heat exchanger 15b for defrosting can be prevented from being decreased by the heat transfer, and the defrosting time can be prevented from being prolonged. The heat is transferred to the hot water from the first refrigeration cycle circuit 1 side by opening the first flow rate control valve 21a so as to maintain the heating performance.

### (Second Embodiment)

Next, a second embodiment of the present disclosure will be described. In the following respective embodiments, the same components as those in the above-mentioned first embodiment are denoted by identical reference numerals, and will be omitted from a description, and different configurations will be described. Incidentally, in the second and subsequent embodiments, the same reference numerals as those in the first embodiment denote identical configurations, and a preceding description is incorporated.

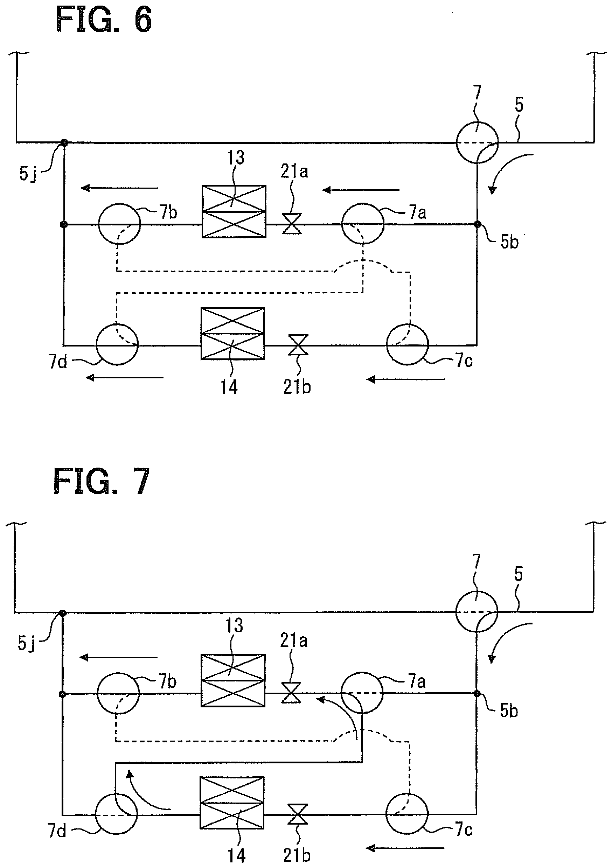

As illustrated in FIG. 6, in the second embodiment, a hot water from an engine configuring a heat source 3 basically flows into a first water-refrigerant heat exchanger 13 and a second water-refrigerant heat exchanger 14 in parallel. However, the hot water can be changed to flow into the first water-refrigerant heat exchanger 13 and the second water-refrigerant heat exchanger 14 in series due to the actuation of multiple flow channel switching valves (also called "three-way valve").

A refrigeration cycle circuit according to the second embodiment of the present disclosure will be described with reference to FIG. 6. In FIG. 6 showing a parallel flow channel, a main switching valve 7 (also merely called "switching valve") allows a hot water that is an engine coolant in a hot water circuit 5 to flow into a first water-refrigerant heat exchanger 13 and a second water-refrigerant heat exchanger 14 in parallel.

As illustrated in FIG. 6, in addition to the main switching valve 7, a first upstream switching valve 7a is provided on each hot-water inflow side and each hot-water outflow side of the first water-refrigerant heat exchanger 13 and the second water-refrigerant heat exchanger 14. In addition, a first downstream switching valve 7b, a second upstream switching valve 7c, and a second downstream switching valve 7d are further provided.

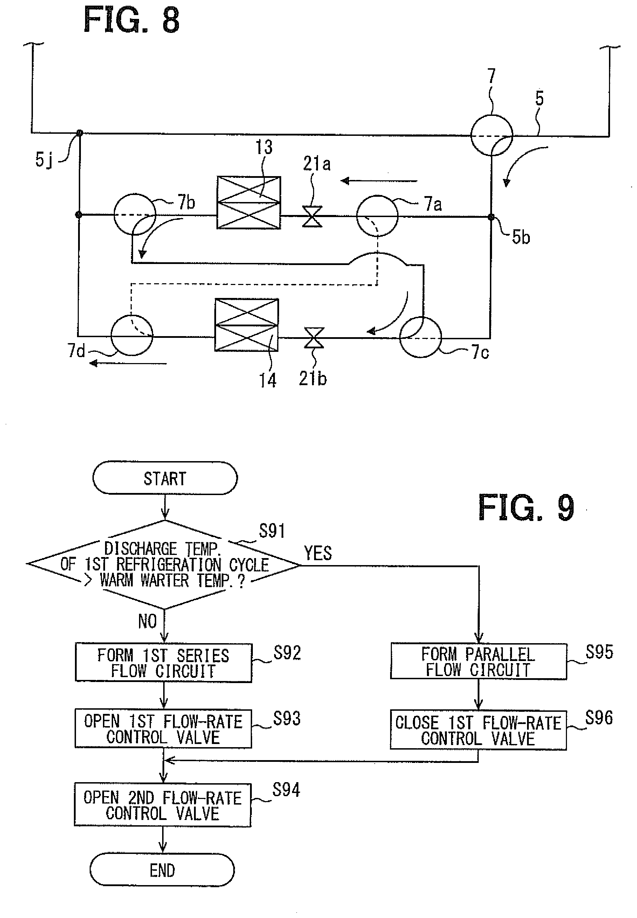

A parallel flow channel forming portion (Step S95) of FIG. 9 in which the actuations of the first upstream switching valve 7a to the second downstream switching valve 7d are switched to form a flow channel in which the hot water flows from the main switching valve 7 into the first water-refrigerant heat exchanger 13 and the second water-refrigerant heat exchanger 14 in parallel is provided in a control device 6. In addition, the control device 6 is provided with a series flow channel forming portion (Step S92) for forming a flow channel in which the hot water flows from the main switching valve 7 into the first water-refrigerant heat exchanger 13 and the second water-refrigerant heat exchanger 14 in series.

According to the above configuration, the flow channel is switched by the multiple switching valves so that the hot water switchably flows into the first water-refrigerant heat exchanger 13 and the second water-refrigerant heat exchanger 14 in parallel or in series. When the hot water flows in series, the heating side can be located on an upstream side and the defrosting side can be located on a downstream side in the first water-refrigerant heat exchanger 13 and the second water-refrigerant heat exchanger 14.

In the first series flow channel illustrated in FIG. 7, as in a flow indicated by a solid line, the hot water first flows in the second water-refrigerant heat exchanger 14 on the heating side, and the hot water flows in the first water-refrigerant heat exchanger 13 on the defrosting side second water-refrigerant heat exchanger 14 in the downstream side. In the second series flow channel illustrated in FIG. 8, as in a flow indicated by a solid line, the hot water first flows into the first water-refrigerant heat exchanger 13 on the heating side, and the hot water flows into the second water-refrigerant heat exchanger 14 on the defrosting side first water-refrigerant heat exchanger 13 in the downstream side. With the above configuration, the heat absorbed from the refrigerant by the water-refrigerant heat exchanger on the heating side can be used for the defrosting of the water-refrigerant heat exchanger immediately on the downstream side.

In the case of a basic configuration in FIG. 6 forming the parallel flow channel, the heat transferred to the hot water from the water-refrigerant heat exchanger in the refrigeration cycle circuit which is not in the defrosting operation is not transferred to the refrigeration cycle circuit that is in the defrosting operation without going around the hot water circuit.

However, the flow channel is switched to the series flow channel so that the heat transferred to the hot water from the water-refrigerant heat exchanger in the refrigeration cycle circuit which is not in the defrosting operation can be transferred to the refrigeration cycle circuit that is in the defrosting operation immediately on the downstream side without going around the hot water circuit.

Also, because the first series flow channel and the second series circuit can be set, even if any one of the first water-refrigerant heat exchanger 13 and the second water-refrigerant heat exchanger 14 is located on the defrosting side, the hot water can first flow in the water-refrigerant heat exchanger that is not at the defrosting side. As a result, after the hot water absorbs the heat from the refrigerant side, the hot water transfers the absorbed heat to the water-refrigerant heat exchanger on the defrosting side, and the heat can be immediately used for defrosting.

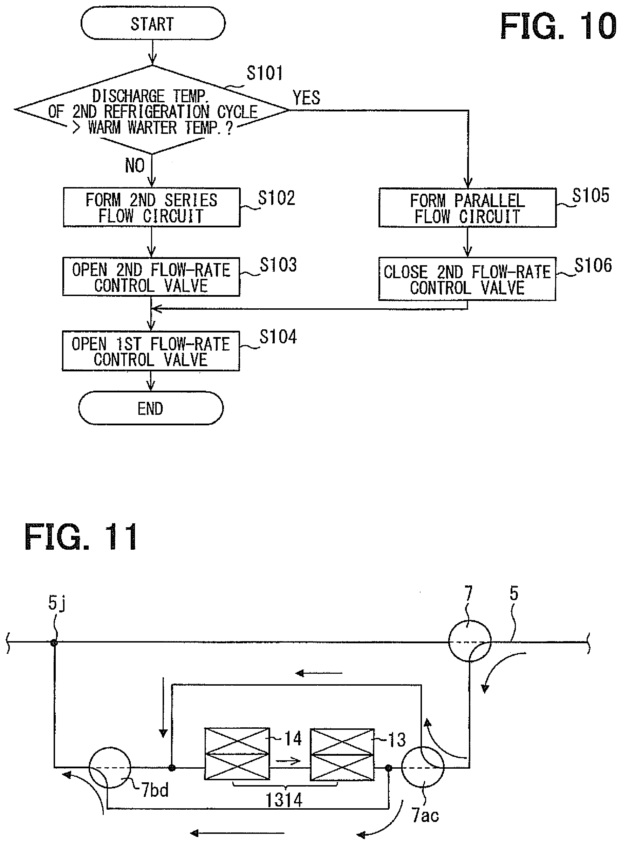

Next, the operation of the second embodiment will be described with reference to FIGS. 9 and 10. First, switching between the first series flow channel and the parallel flow channel in which the first refrigeration cycle circuit 1 is located on the defrosting side and the second refrigeration cycle circuit 2 is located on the heating side will be described.

Referring to FIG. 9, when a control starts, in Step S91, a refrigerant discharge temperature of the first refrigeration cycle circuit 1 is detected by a discharge temperature sensor 36a for detecting the discharge temperature of the refrigerant discharged from the compressor 9a, and is compared with the temperature of the hot water. The temperature of the hot water is detected by the hot water temperature sensor 35.

If the determination result is "no" where the discharge temperature of the refrigerant is not higher than the temperature of the hot water, the control proceeds to Step S92 in which the first series flow channel forming portion is provided and forms the first series flow channel in FIG. 7. In other words, the first upstream switching valve 7a provides a flow channel flowing from a downstream side of the second water-refrigerant heat exchanger 14 toward an upstream side of the first water-refrigerant heat exchanger 13, and the switching valve 7b provides a flow channel flowing from a downstream side of the first water-refrigerant heat exchanger 13 toward a merging portion 5j.

The switching valve 7c provides a flow channel flowing from a branch portion 5b toward the upstream side of the second water-refrigerant heat exchanger 14. The switching valve 7d provides a flow channel flowing from the downstream side of the second water-refrigerant heat exchanger 14 toward the upstream side of the first water-refrigerant heat exchanger 13. In this way, the actuation of the second downstream switching valve 7d is switched by the main switching valve 7 and the first upstream switching valve 7a.

As described above, the series flow channel forming portion in Step S92 of FIG. 9, which forms the flow channel in which the hot water flows from the main switching valve 7 into the first water-refrigerant heat exchanger 13 and the second water-refrigerant heat exchanger 14 in series as illustrated in FIG. 7, is executed.

Next, the control proceeds to Step S93, the first flow rate control valve 21a is opened, and the hot water is allowed to flow in the first water-refrigerant heat exchanger 13. Next, the second flow rate control valve 21b is opened so that the hot water is heated by the second refrigeration cycle circuit 2 that is in the heating operation in Step S94.

If the determination result is "yes" where the discharge temperature of the refrigerant is higher than the temperature of the hot water in Step S91, the control proceeds to Step S95 in which the parallel flow channel forming portion is provided. The actuation of the second downstream switching valve 7d is switched by the main switching valve 7 and the first upstream switching valve 7a so as to form the parallel flow channel in FIG. 6.

In other words, the switching valve 7a provides a flow channel flowing from the branch portion 5b toward the upstream side of the first water-refrigerant heat exchanger 13, and the switching valve 7b provides a flow channel flowing from the downstream side of the first water-refrigerant heat exchanger 13 toward the merging portion 5j. The switching valve 7c provides a flow channel flowing from a branch portion 5b toward the upstream side of the second water-refrigerant heat exchanger 14. The switching valve 7d provides a flow channel flowing from the downstream side of the second water-refrigerant heat exchanger 14 toward the merging portion 5j.

As described above, the parallel flow channel forming portion in Step S95 of FIG. 9, which forms the flow channel in which the hot water flows from the main switching valve 7 into the first water-refrigerant heat exchanger 13 and the second water-refrigerant heat exchanger 14 in parallel is executed.

Next, the control proceeds to Step S96, and the first flow rate control valve 21a in FIG. 6 is closed. Thereafter, the second flow rate control valve 21b is opened in Step S94. Also, the switching between the second series flow channel and the parallel flow channel in which the second refrigeration cycle circuit 2 in FIG. 8 is located on the defrosting side and the first refrigeration cycle circuit 1 is located on the heating side will be described. Referring to FIG. 10, when a control starts, in Step S101, a refrigerant discharge temperature of the second refrigeration cycle circuit 2 is detected by a discharge temperature sensor 36b for detecting the discharge temperature of the refrigerant discharged from the compressor 9b, and is compared with the temperature of the hot water.

If the determination result is "no" where the discharge temperature of the refrigerant is not higher than the temperature of the hot water, the control proceeds to Step S102. The actuation of the second downstream switching valve 7d is switched by the main switching valve 7 and the first upstream switching valve 7a having four valves in total so as to provide the second series flow channel in FIG. 8. In other words, the first upstream switching valve 7a provides a flow channel flowing from the branch portion 5b toward the upstream side of the first water-refrigerant heat exchanger 13. The switching valve 7b provides a flow channel flowing from the downstream side of the first water-refrigerant heat exchanger 13 toward the upstream side of the second water-refrigerant heat exchanger 14. The switching valve 7c provides a flow channel flowing from the downstream side of the second water-refrigerant heat exchanger 14 toward the upstream side of the first water-refrigerant heat exchanger 13. The switching valve 7d provides a flow channel flowing from the downstream side of the second water-refrigerant heat exchanger 14 toward the merging portion 5j. In this way, the actuation of the second downstream switching valve 7d is switched by the main switching valve 7 and the first upstream switching valve 7a. With the above configuration, the flow channel in which the hot water flows from the main switching valve 7 into the first water-refrigerant heat exchanger 13 and the second water-refrigerant heat exchanger 14 in series is provided.

In other words, the second series flow channel forming portion in Step S102 of FIG. 10 is executed. Then, the control proceeds to Step S103, and the second flow rate control valve 21b is opened. Thereafter, the first flow rate control valve 21a is opened in Step S104.

If the determination result in Step S101 is "yes" where the discharge temperature of the refrigerant is higher than the temperature of the hot water, the control proceeds to Step S105. The actuation of the second downstream switching valve 7d is switched by the main switching valve 7 and the first upstream switching valve 7a so as to provide the parallel flow channel in FIG. 6. The control operation in Step S105 is identical with the control operation in Step S95. In other words, the switching valve 7a provides a flow channel flowing from the branch portion 5b toward the upstream side of the first water-refrigerant heat exchanger 13, and the switching valve 7b provides a flow channel flowing from the downstream side of the first water-refrigerant heat exchanger 13 toward the merging portion 5j. The switching valve 7c provides a flow channel flowing from a branch portion 5b toward the upstream side of the second water-refrigerant heat exchanger 14. The switching valve 7d provides a flow channel flowing from the downstream side of the second water-refrigerant heat exchanger 14 toward the merging portion 5j.

As a result, the parallel flow channel forming portion in Step S105, which forms the flow channel in which the hot water flows from the main switching valve 7 into the first water-refrigerant heat exchanger 13 and the second water-refrigerant heat exchanger 14 in parallel is executed. Next, the control proceeds to Step S106, the second flow rate control valve 21b is closed, and the hot water low in the temperature is not allowed to flow in the second water-refrigerant heat exchanger 14. Thereafter, the first flow rate control valve 21a is opened in Step S104.

Hereinafter, effects of the second embodiment will be described. According to the second embodiment, the flow channel is switched by the switching valve 7a to the switching valve 7d so that the hot water switchably flows into the first water-refrigerant heat exchanger 13 and the second water-refrigerant heat exchanger 14 in parallel or in series. When the hot water flows in series, any one of the first water-refrigerant heat exchanger 13 and the second water-refrigerant heat exchanger 14 can be controlled to be located on the downstream side or the upstream side. For that reason, the heat absorbed from the refrigerant can be immediately leveraged for defrosting. In addition, the hot water is allowed to flow in parallel whereby the heat of the hot water circuit can be leveraged for defrosting, the hot water in the hot water circuit can be heated from the refrigerant side, and the heating performance of the hot water circuit can be improved.

According to the second embodiment, the heat absorbed from the refrigerant by the water-refrigerant heat exchanger on the heating side can be immediately used for the defrosting of the water-refrigerant heat exchanger on the downstream side. Further, in the case of a basic configuration forming the parallel flow channel of the flow circuit formed by the parallel flow channel forming portion, the heat transferred to the hot water from the water-refrigerant heat exchanger in the refrigeration cycle circuit which is not in the defrosting operation is not transferred to the refrigeration cycle circuit that is in the defrosting operation without going around the hot water circuit. However, the flow circuit is switched to the series flow channel so that the heat transferred to the hot water from the water-refrigerant heat exchanger in the refrigeration cycle circuit which is not in the defrosting operation can be transferred to the refrigeration cycle circuit that is in the defrosting operation immediately on the downstream side without going around the hot water circuit.

In addition, even if any one of the first water-refrigerant heat exchanger and the second water-refrigerant heat exchanger puts into the defrosting operation, the hot water first flows in the water-refrigerant heat exchanger that is not on the defrosting side, and after the hot water has absorbed the heat from the refrigerant side, the absorbed heat can be used for defrosting in the water-refrigerant heat exchanger on the defrosting side.

According to the second embodiment, the first water-refrigerant heat exchanger 13 and the second water-refrigerant heat exchanger 14 are disposed adjacent to each other, and connected to each other so that the hot water flows in series. In the present specification, the first water-refrigerant heat exchanger 13 and the second water-refrigerant heat exchanger 14 thus connected are abbreviated as a series body 1314. According to the second embodiment, a direction of the hot water flowing in the series body 1314 can be changed. As a result, even if any one of the first water-refrigerant heat exchanger and the second water-refrigerant heat exchanger is located on the heating side or the defrosting side, the hot water is allowed to flow from the heating side toward the defrosting side, and absorbs the heat from the refrigerant so as to be used for the defrosting.

### (Third Embodiment)

Next, a third embodiment of the present disclosure will be described. Portions different from those in the above embodiments will be described. The third embodiment simplifies the flow channel switching valve of the second embodiment, and performs switching between a pseudo-parallel flow channel and a series flow channel. The configuration of the third embodiment can be applied to the first embodiment.

Referring to FIG. 11, a hot water flows into a first water-refrigerant heat exchanger 13 and a second water-refrigerant heat exchanger 14 in series from a hot water circuit 5 through a main switching valve 7. The first water-refrigerant heat exchanger 13 and the second water-refrigerant heat exchanger 14 are connected in series with each other, and the hot water is supplied to the first water-refrigerant heat exchanger 13 and the second water-refrigerant heat exchanger 14 from the hot water circuit 5 through the main switching valve 7.

A series body upstream switching valve 7ac and a series body downstream switching valve 7bd, that is, two valves in total are disposed on an upstream side and a downstream side of a series body 1314 including the first water-refrigerant heat exchanger 13 and the second water-refrigerant heat exchanger 14. The series body upstream switching valve 7ac is connected with a first series flow channel that communicates with a flow channel between the second water-refrigerant heat exchanger 14 and the series body downstream switching valve 7bd. The series body downstream switching valve 7bd is connected with a second series flow channel that communicates with a flow channel between the series body upstream switching valve 7ac and the first water-refrigerant heat exchanger 13. The control device 6 includes a first series body flow channel forming portion for setting a direction of the hot water flowing in the series body 1314 so as to flow in the first water-refrigerant heat exchanger 13 from the second water-refrigerant heat exchanger 14 by the series body upstream switching valve 7ac and the series body downstream switching valve 7bd as illustrated in FIG. 11.

When a first series body flow channel providing control in the control device 6 starts, as illustrated in FIG. 11, the first series body flow channel forming portion switches the main switching valve 7 and the series body upstream switching valve 7ac so that the hot water flows into the downstream side of the second water-refrigerant heat exchanger 14 from the main switching valve 7 through the first series flow channel. In addition, the first series body flow channel forming portion switches the series body downstream switching valve 7bd so that the hot water flows through the second series flow channel from the upstream side of the first water-refrigerant heat exchanger 13 toward the merging portion 5j.

Next, the control device 6 includes a second series body flow channel forming portion for setting a direction of the hot water flowing in the series body 1314 so as to flow in the second water-refrigerant heat exchanger 14 from the first water-refrigerant heat exchanger 13 by the series body upstream switching valve 7ac and the series body downstream switching valve 7bd.

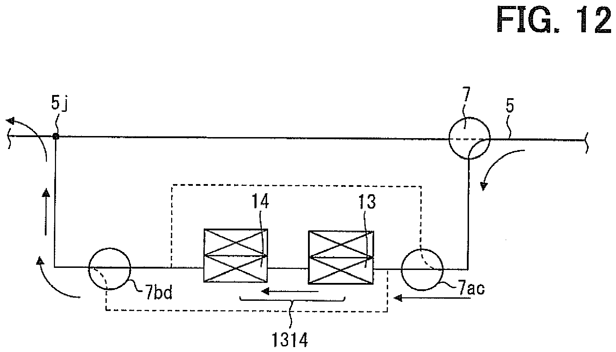

When a second series body flow channel providing control in the control device 6 starts, as illustrated in FIG. 12, the second series body flow channel forming portion switches the series body upstream switching valve 7ac so that the hot water flows into the upstream side of the first water-refrigerant heat exchanger 13 from the main switching valve 7. In addition, the second series body flow channel forming portion switches the series body downstream switching valve 7bd so that the hot water flows from the downstream side of the second water-refrigerant heat exchanger 14 toward the merging portion 5j.

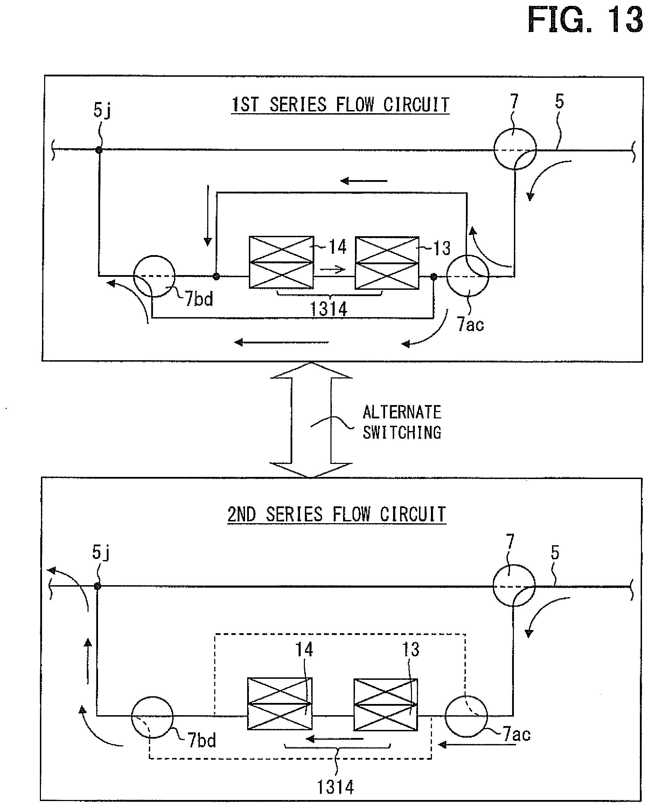

As illustrated in FIG. 13, the setting of the first series flow channel and the setting of the second series body flow channel may be alternately switched at predetermined time intervals. In other words, the control device 6 includes an alternating flow channel forming portion that switches the flow direction of the hot water flowing in the series body 1314 by the series body upstream switching valve 7ac and the series body downstream switching valve 7bd alternately in opposite directions at predetermined time intervals.

According to the above configuration, as illustrated in FIG. 12, the hot water absorbs the heat from the refrigerant through the first water-refrigerant heat exchanger 13 by the second series body flow channel forming portion (Step S144) set so that the hot water flows from the first water-refrigerant heat exchanger 13 into the second water-refrigerant heat exchanger 14. The absorbed hot water flows from the first water-refrigerant heat exchanger 13 into the second water-refrigerant heat exchanger 14, thereby being capable of efficiently executing the defrosting.

Conversely, as illustrated in FIG. 11, the hot water absorbs the heat from the refrigerant through the second water-refrigerant heat exchanger 14 by the first series body flow channel forming portion set so that the hot water flows from the second water-refrigerant heat exchanger 14 into the first water-refrigerant heat exchanger 13. The absorbed hot water flows into the first water-refrigerant heat exchanger 13, thereby being capable of efficiently executing the defrosting.

Further, the pseudo-parallel flow channel in the same manner that the hot water flows into the first water-refrigerant heat exchanger 13 and the second water-refrigerant heat exchanger 14 in parallel can be configured by the alternating flow channel forming portion for switching the direction of the hot water flowing into the series body 1314 at the predetermined time intervals. Moreover, since the series body upstream switching valve 7ac and the series body downstream switching valve 7bd which are two switching valves are merely added to the main switching valve as the switching valves, the valve configuration can be simplified.

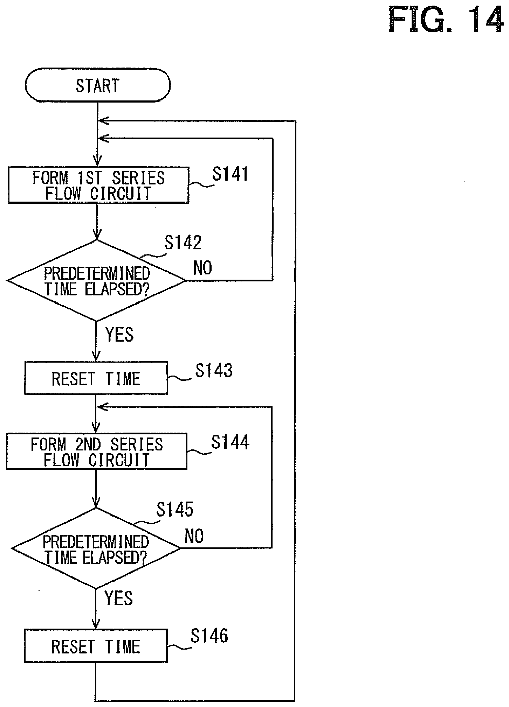

FIG. 14 illustrates a flowchart of the control according to the third embodiment. When the first refrigeration cycle circuit 1 and the second refrigeration cycle circuit 2 are in the heating operation at the same time, a control starts. Next, in Step S141 configuring the first series body flow channel forming portion, the series body upstream switching valve 7ac is switched so that the hot water flows from the main switching valve 7 to the downstream side of the second water-refrigerant heat exchanger 14. In addition, the series body downstream switching valve 7bd is switched so that the hot water flows from the upstream side of the first water-refrigerant heat exchanger 13 to the merging portion 5j.

Next, when a predetermined time elapses in a timer in Step S142, the control proceeds to Step S143, a count time of the timer is reset. Also, in Step S144 configuring the second series body flow channel forming portion, the series body upstream switching valve 7ac is switched so that the hot water flows from the main switching valve 7 into the upstream side of the first water-refrigerant heat exchanger 13.

In addition, the series body downstream switching valve 7bd is switched so that the hot water flows from the downstream side of the second water-refrigerant heat exchanger 14 toward the merging portion 5j. Next, it is determined whether a predetermined time elapses, or not, in Step S145, the control proceeds to Step S146, and the time of the timer is reset.

In FIG. 14, Steps S142 and S143 and Steps S145 and S146 form the alternating flow channel forming portion. Although omitted, the control is completed when an operation stop is instructed during the flow of the flowchart.

Hereinafter, the effects of the third embodiment will be described. According to the third embodiment, the direction of the hot water flowing in the series body 1314 can be changed. Further, since the alternating flow channel forming portion for switching the direction of the hot water flowing in the series body 1314 at the predetermined time intervals is provided, the same effect as that when the hot water flows into the first water-refrigerant heat exchanger 13 and the second water-refrigerant heat exchanger 14 in pseudo-parallel can be obtained. In addition, the number of series body upstream switching valve 7ac and the number of series body downstream switching valve 7bd for switching the flow channel can be reduced.

### (Fourth Embodiment)

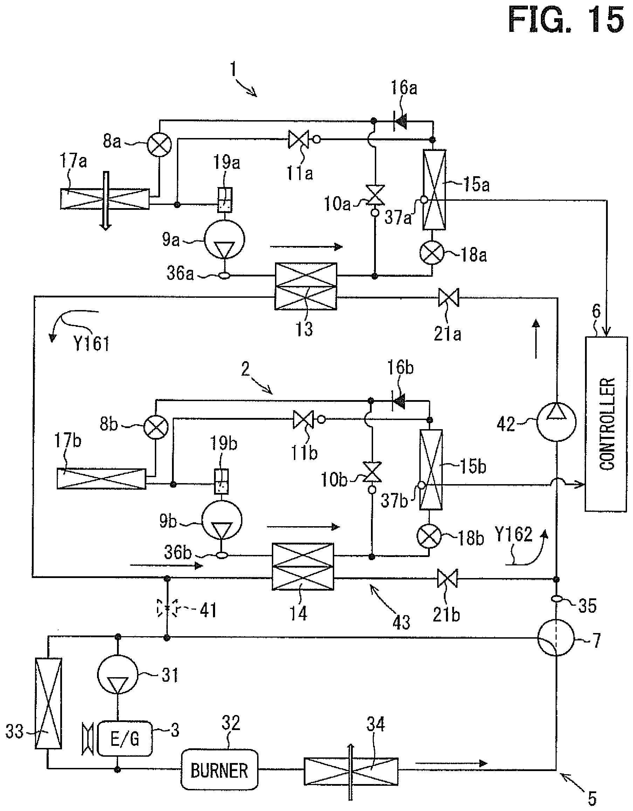

A fourth embodiment in FIG. 15 includes multiple refrigeration cycle circuits 1, 2, a hot water circuit 5 that cools a heat source, and a control device 6 that controls the respective refrigeration cycle circuits 1, 2, and the hot water circuit 5. Further, the fourth embodiment includes a first water-refrigerant heat exchanger 13 that performs a heat exchange between the hot water circuits 5, 43 and one refrigeration cycle circuit 1, and a second water-refrigerant heat exchanger 14 that performs the heat exchange between the hot water circuits 5, 43 and the other refrigeration cycle circuit 2. A configuration of the fourth embodiment can employ the configuration of the second embodiment or the configuration of the third embodiment.

The hot water circuit includes the hot water circuit 5 that forms a loop passing through the heat source 3 and an independent hot water circuit 43 (independent coolant circuit) that forms a loop separated independently from the heat source 3. The multiple refrigeration cycle circuits 1 and 2 form heat pumps that pump a heat from an air through the first exterior heat exchanger 15a and the second exterior heat exchanger 15b, respectively.

In the fourth embodiment, the first refrigeration cycle circuit 1 and the second refrigeration cycle circuit 2 perform cooling operation and heating operation in a vehicle interior. In this operation, the hot water circuit 5, the first refrigeration cycle circuit 1, and the second refrigeration cycle circuit 2 exchange the heat through the first water-refrigerant heat exchanger 13 and the second water-refrigerant heat exchanger 14.

However, in a condition where the refrigeration cycle side can absorb the heat from the hot water during defrosting, an independent hot water circuit 43 is formed, in which the hot water circulates between the first water-refrigerant heat exchanger 13 and the second water-refrigerant heat exchanger 14 as indicated by arrows Y161 and Y162 by the aid of a dedicated independent water pump 42. The independent water pump 42 is a non-positive displacement pump of the same type as the water pump 31 in which the fluid flows due to the rotation of an impeller.

With the above configuration, one of the multiple refrigerant cycle circuits, for example, the first refrigeration cycle circuit 1 circulates the hot water in the independent hot water circuit 43 during the defrosting operation. The heat of the refrigerant in the other refrigeration cycle circuit that does not perform the defrosting operation, for example, the second refrigeration cycle circuit 2 is transferred to the refrigeration cycle circuit that is in the defrosting operation through the independent hot water circuit 43.

In that case, the independent hot water circuit 43 and the hot water circuit 5 passing through the engine are separated from each other without communicating with each other, and the temperature of the hot water circuit 5 is not decreased even if the heat of the independent hot water circuit 43 is fully used for defrosting. With the above configuration, since the hot water circuit 5 that passes through the engine can supply the heat from the engine to the heater core 34 by the engine side water pump 31, the heating performance can be ensured without any decrease in the temperature of the heater core 34. In other words, in the independent hot water circuit 43, the hot water is separated independently from the hot water circuit 5, and can be circulated in the first water-refrigerant heat exchanger 13 and the second water-refrigerant heat exchanger 14.

When one refrigeration cycle circuit 1 of the multiple refrigeration cycle circuits 1 and 2 puts into the defrosting operation for defrosting in the first exterior heat exchanger 15a, the control device 6 compares the temperature of the hot water of the hot water circuits 5 and 43 with a discharge temperature of the refrigerant flowing in one refrigeration cycle circuit 1.

As a result, if it is determined that one refrigeration cycle side is in a state where the heat can be absorbed from the hot water circuits 5 and 43, the hot water in the hot water circuits 5 and 43 is allowed to flow in the first water-refrigerant heat exchanger 13. In order to allow the hot water to flow, the independent water pump 42 and the first flow rate control valve 21a are provided.

In addition, a switching valve 7 for allowing the hot water from the hot water circuit 5 passing through the heat source 3 to flow in the first water-refrigerant heat exchanger 13 and the second water-refrigerant heat exchanger 14. When the refrigeration cycle can absorb the heat from the hot water during defrosting, the hot water is circulated in the independent hot water circuit 43, and the hot water circuit is separated independently from the hot water circuit flowing in the engine. When the one refrigeration cycle circuit 1 is not in the defrosting operation, or when the refrigeration cycle cannot absorb the heat from the hot water during the defrosting operation, the hot water circuits 5 and 43 can be heated by the heat of the refrigerant in the refrigeration cycle circuit. The main switching valve 7 can separate the independent hot water circuit 43 independently from the hot water circuit.

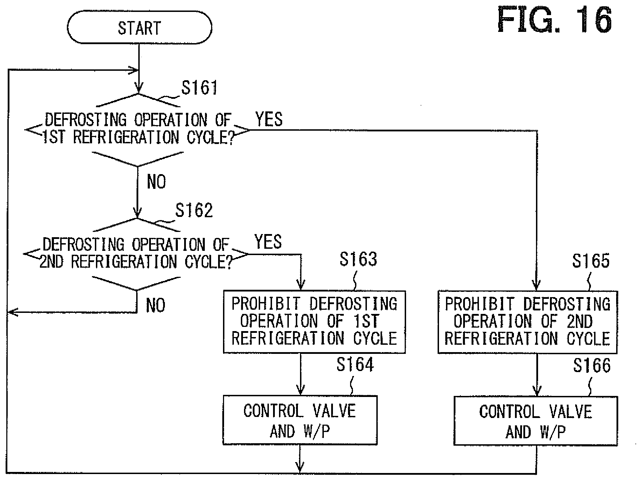

Referring to FIG. 16, a flowchart of the fourth embodiment will be described. When a control starts in the heating mode, it is determined whether the first refrigeration cycle circuit 1 is in the defrosting operation, or not, in Step S161. If the first refrigeration cycle circuit 1 is not in the defrosting operation, it is determined whether the second refrigeration cycle circuit 2 is in the defrosting operation, or not, in Step S162. If the second refrigeration cycle circuit 2 is in the defrosting operation in Step S162, the defrosting operation of the first refrigeration cycle circuit 1 is prohibited in Step S163, and the heating operation is continued. The control proceeds to Step S164.

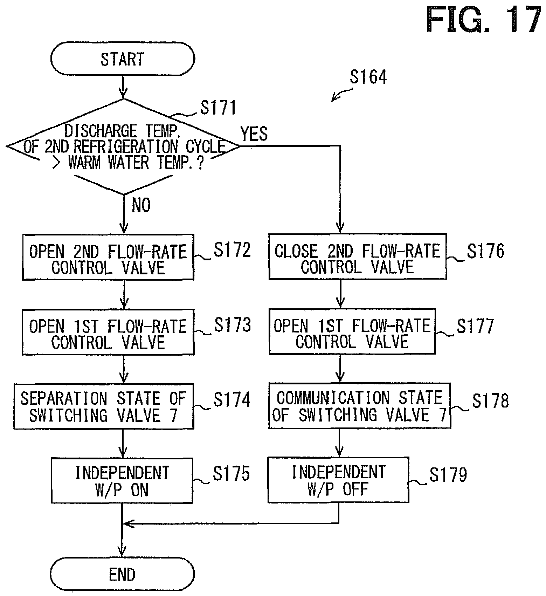

The details of Step S164 are illustrated in FIG. 17. In Step S171 of FIG. 17, it is determined whether the discharge temperature of the compressor 9b in the second refrigeration cycle circuit 2 is higher than the temperature of the hot water, or not. If the discharge temperature is not higher than the temperature of the hot water, the second flow rate control valve 21b is opened in Step S172. Then, the first flow rate control valve 21a is opened in Step S173. In Step S174, the switching valve 7 is switched to a separation state as illustrated in FIG. 15, and the hot water circuit 5 is separated from the independent hot water circuit 43. Then, in Step S175, the independent water pump 42 (independent W/P) is turned on.

As a result of determining whether the discharge temperature of the compressor in the second refrigeration cycle circuit 2 is higher than the temperature of the hot water, or not, in Step S171, if the discharge temperature is higher than the temperature of the hot water, the second flow rate control valve 21 b is closed in Step S176. Then, the first flow rate control valve 21a is opened in Step S177. Then, in Step S178, the switching valve 7 is switched to a communication state as illustrated in FIG. 1, and the hot water circuit 5 communicates with the independent hot water circuit 43. Then, the independent water pump 42 (independent W/P) is turned off in Step S179.

In Step S161 of FIG. 16, when the first refrigeration cycle circuit 1 is in the defrosting operation, the defrosting operation of the second refrigeration cycle circuit 2 is prohibited in Step S165, and the heating operation is continued. The control proceeds to Step S166.

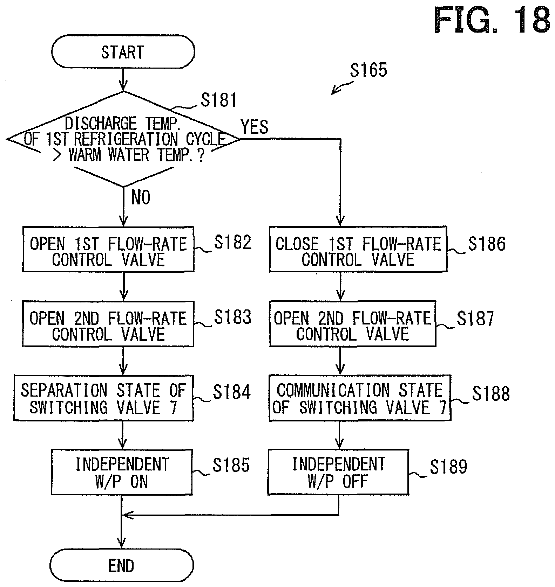

The details of Step S166 are illustrated in FIG. 18. In Step S181 of FIG. 18, it is determined whether the discharge temperature of the compressor 9a in the first refrigeration cycle circuit 1 is higher than the temperature of the hot water, or not. If the discharge temperature is not higher than the temperature of the hot water, the first flow rate control valve 21a is opened in Step S182. Then, the second flow rate control valve 21 b is opened in Step S183. In Step S184, the switching valve 7 is switched to a separation state as illustrated in FIG. 15, and the hot water circuit 5 is separated from the independent hot water circuit 43. Then, in Step S185, the independent water pump 42 is turned on.

As a result of determining whether the discharge temperature of the compressor 9a in the first refrigeration cycle circuit 1 is higher than the temperature of the hot water, or not, in Step S181, if the discharge temperature is higher than the temperature of the hot water, the first flow rate control valve 21a is closed in Step S186. Then, the second flow rate control valve 21b is opened in Step S187. Then, in Step S188, the switching valve 7 is switched to a communication state as illustrated in FIG. 1, and the hot water circuit 5 communicates with the independent hot water circuit 43. Then, in Step S189, the independent water pump 42 is turned off.

Hereinafter, the effects of the fourth embodiment will be described. According to the fourth embodiment, the heat of the refrigerant from another refrigeration cycle circuit can be supplied to the refrigeration cycle circuit that performs the defrosting operation by the independent hot water circuit 43 connecting the first water-refrigerant heat exchanger 13 and the second water-refrigerant heat exchanger 14.

Therefore, the defrosting efficiency of the first exterior heat exchanger 15a and the second exterior heat exchanger 15b can be improved, and the defrosting time can be reduced. In addition, since the independent hot water circuit 43 and the hot water circuit 5 that passes through the heat source 3 are separated from each other to allow the hot water to flow, there is no case in which the temperature of the hot water in the hot water circuit 5 that passes through the heat source 3 is extremely reduced.

In other words, the hot water circuit 5 on the heat source 3 side having the heater core 34 is separated independently from the independent hot water circuit 43, even if the heat absorbed by the water-refrigerant heat exchanger from one refrigeration cycle circuit is fully used for the defrosting of the other refrigeration cycle circuit, the heating by the heater core is not extremely decreased.

### (Fifth Embodiment)

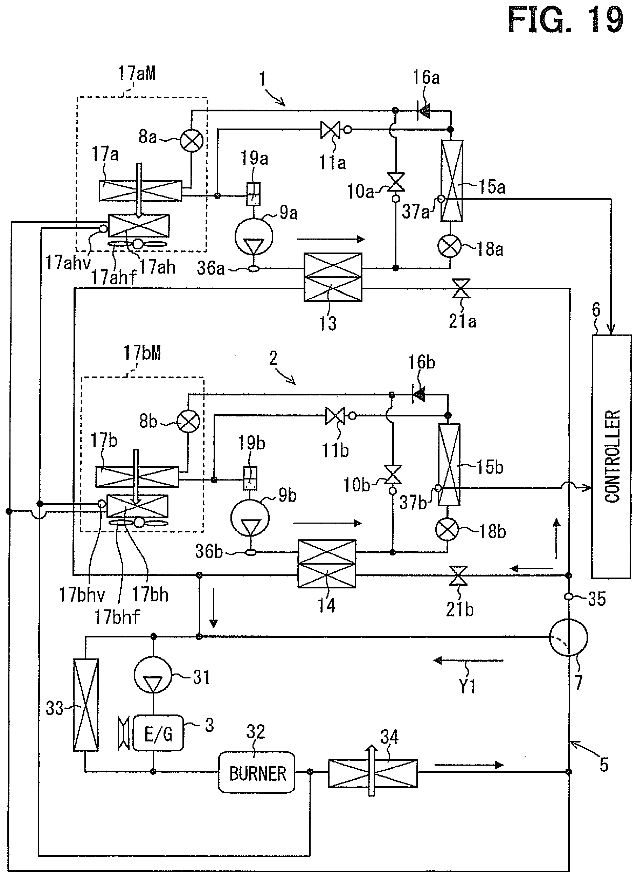

Next, a fifth embodiment will be described. The above first to fourth embodiments are directed to a system having the multiple water-refrigerant heat exchangers, but the system cannot perform dehumidifying heating. In view of the above problem, the fifth embodiment illustrated in FIG. 19 provides a system that can perform dehumidifying heating, set multiple air conditionable zones, and perform zone air conditioning for each zone. In particular, the system enables an aimed temperature adjustment for each zone in the bus. In addition, the fifth embodiment provides a reheat air conditioning apparatus that does not need to have additional components such as a damper for switching the flow of air-conditioning air in an air conditioning duct, and can perform a fine temperature control. The configuration of the second embodiment and the configuration of the third embodiment can be applied to the fifth embodiment.

Hereinafter, the fifth embodiment will be described in detail with reference to FIG. 19. Reheat cores 17ah and 17bh (that is, first reheat core 17ah, second reheat core 17bh) in which a hot water of a hot water circuit 5 flows are disposed adjacent to interior heat exchangers 17a and 17b. The air-conditioning air that has passed through the interior heat exchangers 17a and 17b is reheated by the reheat cores 17ah and 17bh. The degree of reheat, that is, the degree of temperature adjustment is adjusted by flow regulation valves 17ahv and 17bhv for adjusting the amount of hot water flowing in the reheat cores 17ah and 17bh, respectively. The other configurations are identical with those in FIG. 1.

The reheat cores 17ah and 17bh are disposed in an air conditioner unit of a vehicle ceiling, and enable dehumidifying heating operation. The air conditioner unit has an interior heat exchanger 17a, a reheat core 17ah, a blower 17ahf that blows an air toward the interior heat exchanger 17a and the reheat core 17ah, a first electronic expansion valve 8a, and the flow regulation valve 17ahv as one set. The one set is integrated as a module 17aM (first module) as indicated by a broken line.

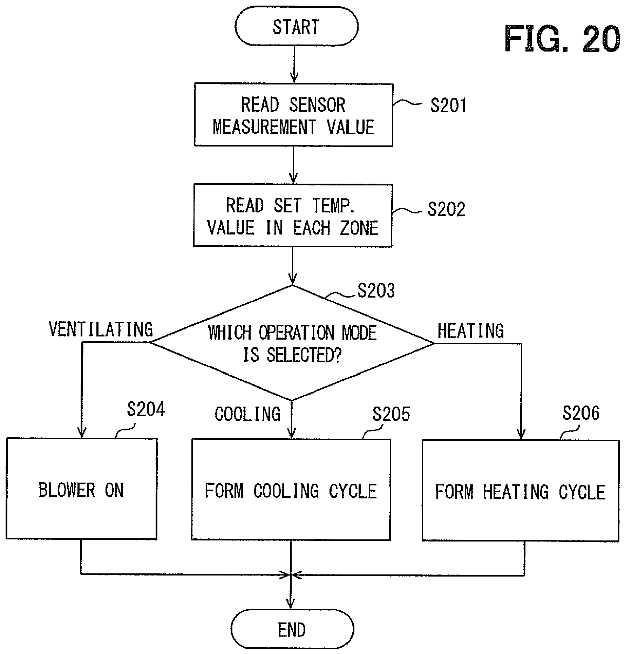

Similarly, the reheat core 17bh side is integrated as a module 17bM (second module). With such modularization, the temperature regulation is enabled for each zone. The outline of the control in the fifth embodiment will be described with reference to FIG. 20. When a control starts, measurement values of various sensors such as an inside air temperature that is an air temperature in a vehicle interior, an outside air temperature, an inside air humidity, a temperature of the hot water, and so on are read in Step S201. Then, a temperature set value set for each zone, that is, each region given to the arranged modules is read in Step S202.

Then, the operation mode is determined in Step S203, and the control proceeds to any one of Step S204, Step S205, and Step S206 according to the determined operation mode. The determination of the operation mode may be determined according to an operation signal from a vehicle driver or a deviation between the vehicle interior temperature and the current temperature set value. When an air blowing mode is determined, the control proceeds to Step S204, and the blowers 17ahf and 17bhf are energized.

Also, when a cooling mode is determined, the control proceeds to Step S205, and a cooling cycle is provided. In other words, air volumes of the blowers 17ahf and 17bhf are controlled for the purpose of radiating the heat by the exterior heat exchangers 15a and 15b and cooling the vehicle interior by the interior heat exchangers 17a and 17b, and variable capacity control of the compressors 9a and 9b is executed. In addition, the control of the second electronic expansion valves 18a and 18b is executed.

Further, when the heating mode is determined, the control proceeds to Step S206, and the heating cycle is provided. The heat is absorbed by the exterior heat exchangers 15a and 15b in FIG. 19, dehumidifying is performed in the interior heat exchangers 17a and 17b, the air volumes of the blowers 17ahf and 17bhf are controlled, and the variable capacity control of the compressors 9a and 9b is executed. In addition, the control of the second electronic expansion valves 18a and 18b is executed. Further, the air-conditioning air dehumidified by the interior heat exchangers 17a and 17b is reheated by the reheat cores 17ah and 17bh. In the degree of reheat, the amount of hot water flowing in the reheat cores 17ah and 17bh is controlled by the degree of opening of the flow regulation valve 17ah1v or the like.

Hereinafter, effects of the fifth embodiment will be described. The fifth embodiment includes the reheat cores 17ah and 17bh that reheat the air-conditioning air passing through the interior heat exchangers 17a and 17b by the heat of the hot water flowing in the hot water circuit 5. Hence, the air conditioning control including the dehumidifying heating can be performed with the use of the hot water that can receive the heat from the refrigeration cycle and easily holds a high temperature. In particular, when the reheat cores are provided in a ceiling portion of the bus, the heating from the feet heater core 34 and the heating from the reheat cores 17ah and 17bh can be combined together.

### (Sixth Embodiment)

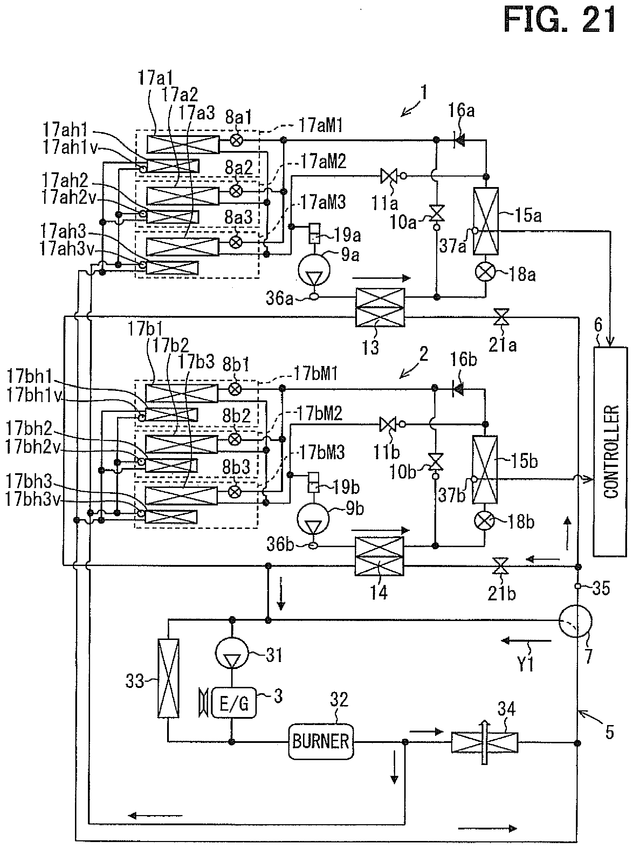

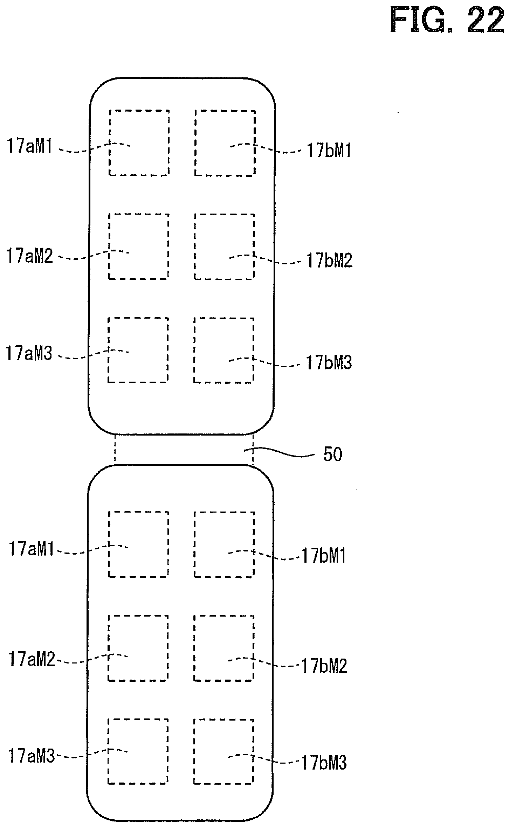

Next, a sixth embodiment will be described. In the above fifth embodiment, one module indicated by the broken line is provided for one refrigeration cycle circuit. In the sixth embodiment, as illustrated in FIG. 21, multiple modules 17aM1 to 17aM3 (first module) are provided in one refrigeration cycle circuit. In addition, as illustrated in FIG. 22, the modules 17aM1 to 17bM3 are disposed so that air conditioning on the left of a bus is performed by a first refrigeration cycle circuit 1, and air conditioning on the right of the bus is performed by a second refrigeration cycle circuit 2. The configuration of the second embodiment and the configuration of the third embodiment can be applied to the sixth embodiment.

In the first embodiment of FIG. 1, the system having multiple water-refrigerant heat exchangers is provided, but the reheat core is not provided as a set of the interior heat exchanger formed of an evaporator. Therefore, the dehumidifying heating cannot be performed. In addition, because only one interior heat exchanger formed of the evaporator is provided for one refrigeration cycle circuit, there is a problem that the zone air conditioning cannot be finely set.

In view of the above difficulties, the sixth embodiment provides a system that can perform three or more zone air conditionings in the case where an air conditioning region is long in an anteroposterior direction such as the bus, or in the case of an articulated bus in which two or more vehicle bodies are connected to each other for mass transport. The system enables an individual temperature adjustment for each zone in the bus. In addition, the sixth embodiment provides an air conditioning apparatus capable of controlling the temperature without the provision of additional components such as a damper for switching the flow of air-conditioning air in an air conditioning duct.

Hereinafter, the sixth embodiment will be described in detail with reference to FIG. 21. As illustrated in FIG. 21, reheat cores 17ah1, 17ah2, and 17ah3 (first reheat core) in which a hot water of a hot water circuit 5 flows are disposed adjacent to interior heat exchangers 17a1 to 17a3 (first interior heat exchanger), respectively. The air-conditioning air that has passed through the interior heat exchangers 17a1, 17a2, and 17a3 is reheated by the reheat cores 17ah1, 17ah2, and 17ah3, respectively.

The degree of reheat, that is, the degree of temperature adjustment is adjusted by flow regulation valves 17ah1v for adjusting the amount of hot water flowing in each of the reheat cores 17ah1, 17ah2, and 17ah3. The other configurations are identical with those in FIG. 1. The same is applied to the interior heat exchangers 17b1 to 17b3 (second interior heat exchanger) side.

The reheat core 17ah1 is disposed in the air conditioner unit of the vehicle ceiling, and enables dehumidifying heating operation. The air conditioner unit has an interior heat exchanger 17a1 formed of an evaporator, a reheat core 17ah1, a blower that blows an air toward the interior heat exchanger 17a1 and the reheat core 17ah1, a first electronic expansion valve 8a1, and the flow regulation valve 17ah1v as one set. The one set is integrated as a module 17aM1.

The module 17aM2 having the first electronic expansion valve 8a2 and the flow regulation valve 17ah2v is modularized with the interior heat exchanger, the reheat core, and the blower that blows the air toward the interior heat exchanger and the reheat core as one set. The same is applied to the module 17aM3 having the first electronic expansion valve 8a3 and the flow regulation valve 17ah3v.

Similarly, the reheat cores 17bh1 to 17bh3 (second reheat core) side is integrated as the modules 17bM1 to 17bM3 (second module). With such modularization, the temperature adjustment for each zone is finely performed, and the layout of the respective modules is devised, thereby being capable of flexibly coping with a difference in size in the vehicle anteroposterior direction of the unit and special measures such as the articulated bus.

FIG. 22 is a layout diagram of the modules 17aM1 to 17aM3 and 17bM1 to 17bM3 in the sixth embodiment when the ceiling portion of the articulated bus in which two vehicle bodies are coupled to each other by a bellows-shaped passage 50 is viewed from top. The number and layout of modules are determined according to a length of the vehicle body or the presence or absence of an articulation, as a result of which the introduction of the air-conditioning air into the vehicle bodies of the bus different in the length can be appropriately performed.

Hereinafter, effects of the sixth embodiment will be described. In the sixth embodiment, the multiple reheat cores 17ah1 to 17ah3 and 17bh1 to 17bh3 are disposed in the refrigeration cycle circuits 1 and 2, respectively. Hence, the heating air from the multiple reheat cores can be distributed to condition the air in the vehicle. Also, the reheat cores 17ah1 to 17bh3 are modularized together with the interior heat exchangers 17a1 to 17b3 and the blowers that blow the air toward the respective interior heat exchangers, and the modules are disposed on at least six places of the vehicle ceiling portion. Hence, the zone air conditioning can be finely set for each module. In addition, the number and layout of modules are changed according to the length of the vehicle body, thereby being capable of easily coping with an appropriate air conditioning control of the long vehicle body.

### (Seventh Embodiment)

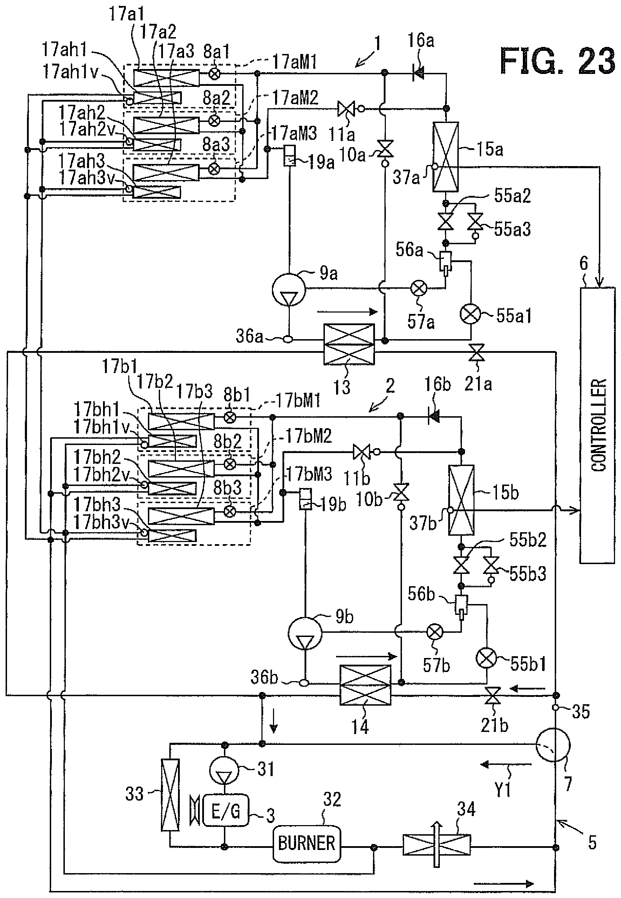

Next, a seventh embodiment will be described. in the seventh embodiment, as illustrated in FIG. 23, a gas injection cycle is employed for a refrigeration cycle circuit. With the employment of the gas injection cycle, a heating performance at a low outside air temperature can be improved. The gas injection cycle is configured in such a manner that two expansion valves 55a1 and 55a2 are disposed in a depressurizing unit of a single-stage cycle, and a gas-liquid separator 56a is disposed between those two expansion valves 55a1 and 55a2. The configuration in which the gas injection cycle is employed for the refrigeration cycle circuit according to the seventh embodiment can be applied to each of the above embodiments.

In the gas injection cycle, a liquid refrigerant at high pressure discharged from a first water-refrigerant heat exchanger 13 forming a condenser is reduced down to an injection pressure of an intermediate pressure by an upstream side expansion valve 55a1, put into a gas-liquid two-phase having a predetermined dryness, and enters a gas-liquid separator 56a. In the gas-liquid separator 56a, the refrigerant is separated into a saturated gas refrigerant and a saturated liquid refrigerant. Thereafter, the saturated liquid refrigerant is further reduced in pressure by a downstream side expansion valve 55a2, and enters the first exterior heat exchanger 15a with a low pressure. The refrigerant absorbs the heat and evaporates in the first exterior heat exchanger 15a, and is drawn in the compressor 9a.

The downstream side expansion valve 55a2 is formed of a fixed throttle. An electromagnetic valve 55a3 short-circuits both ends of the expansion valve 55a2 when no gas injection is provided, and allows the refrigerant to flow. In this situation, because no differential pressure occurs between both ends of the fixed throttle configuring the expansion valve 55a2, a differential pressure valve 57a is closed, and the gas injection is not performed. The expansion valve 55a2 and the differential pressure valve 57a, can be formed integrally with an electromagnetic valve 55a3 as an integrated valve. When the gas injection is performed, the saturated gas refrigerant is injected into a compression chamber of the compressor 9a.

In this gas injection cycle, since the refrigerant dryness at an inlet of the exterior heat exchanger 15a formed of the evaporator is reduced by the gas-liquid separation, the refrigerant effect is superior to the single-stage cycle in FIG. 1. Because an evaporation performance is represented by a product of the refrigerant flow rate and the refrigerating effect, if the evaporation performance is kept constant, an evaporation side refrigerant flow rate in the injection cycle is smaller than a refrigerant flow rate in the single-stage cycle. For that reason, a low-stage side compression work of the compressor, which is obtained by the product of a low-stage side adiabatic compression enthalpy difference and the refrigerant flow rate is reduced, to thereby improve the efficiency of the refrigeration cycle.

In an actual gas injection cycle, the refrigerant flow rate flowing in the exterior heat exchanger 15a formed of the evaporator is reduced. In addition, a specific volume of the refrigerant in the exterior heat exchanger 15a is reduced due to a reduction in the dryness at the inlet of the exterior heat exchanger 15a, and the pressure loss of the exterior heat exchanger 15a side refrigerant flow is reduced. As a result, a compressor suction pressure is increased, and the compression work can be further reduced.

Likewise, in the second refrigeration cycle circuit 2, two expansion valves 55b1 and 55b2 are provided in the depressurizing unit, and a gas-liquid separator 56b is provided between those two expansion valves 55b1 and 55b2. In the gas injection cycle, a liquid refrigerant at high pressure discharged from a second water-refrigerant heat exchanger 14 forming a condenser is reduced down to an injection pressure of an intermediate pressure by an upstream side expansion valve 55b1, put into a gas-liquid two-phase having a predetermined dryness, and enters a gas-liquid separator 56b. In the gas-liquid separator 56b, the refrigerant is separated into a saturated gas refrigerant and a saturated liquid refrigerant. Thereafter, the saturated liquid refrigerant is further reduced in pressure by the downstream side expansion valve 55b2, enters the second exterior heat exchanger 15b formed of the evaporator with a low pressure, absorbs the heat, evaporates, and is drawn in the compressor 9b. On the other hand, the saturated gas refrigerant is injected into a compression chamber in the compressor 9b.

Hereinafter, effects of the seventh embodiment will be described. In the seventh embodiment, the first refrigeration cycle circuit 1 and the second refrigeration cycle circuit 2 are gas injection cycles. Hence, the air can be conditioned in the vehicle by not only the effective use of the hot water by the multiple refrigeration cycles but also the refrigeration cycle high in efficiency, and the energy can be further saved.

Whether defrosting is performed, or not, may be controlled by a fin temperature of the exterior heat exchanger, or the defrosting may be started by a timer at predetermined time intervals. The control device 6 is integrated as an air-conditioning control device (air conditioner ECU), but may be separated into the first refrigeration cycle circuit and the second refrigeration cycle circuit. When the control device is separated into the two refrigeration cycle circuits, if a failure occurs, a one-side operation which is not in failure may be enabled. Since the capacity of one compressor can be reduced, there is no need to manufacture a large-sized compressor. Basically, the control device 6 controls both of the refrigeration cycle circuit and the hot water circuit by one ECU, but the control of the hot water circuit may be separated from the control of the refrigeration cycle.

Step S43 in FIG. 4 and Step S53 in FIG. 5 may be performed immediately after a start. In FIG. 15, the flow rate control valve 41 illustrated in a dashed line is not provided, but that portion is replaced with a simple piping portion. However, in FIG. 15, because the flow is surely divided when the independent water pump 42 is actuated, the flow rate control valve 41 may be added to the broken line portion.

In addition, the temperature of the hot water measured by the sensor is compared with the discharge temperature in a cycle that is in the defrosting operation. However, the temperature of the hot water may be compared with the discharge temperature of the refrigerant in a cycle that is not in the defrosting operation, or a temperature obtained by multiplying the discharge temperature by a constant coefficient (range of from 0 to 1) as the temperature of the hot water.

Further, the above example, the valve is closed in order to prevent the heat exchange between the water-refrigerant heat exchanger and the hot water circuit, and the hot water does not flow in the water-refrigerant heat exchanger. Alternatively, a bypass valve may be opened, and the hot water or the refrigerant flowing in the water-refrigerant heat exchanger may be bypassed in order to prevent the heat exchange between the water-refrigerant heat exchangers and the hot water circuit.

## Claims

1. A refrigeration cycle device comprising:
a first refrigeration cycle circuit (1) including a first exterior heat exchanger (15a);
a second refrigeration cycle circuit (2) including a second exterior heat exchanger (15b);
a heat source coolant circuit (5) including a heat source (3) and a heater core (34) that cools the heat source (3) and heats an air-conditioning air to be blown into a vehicle interior;
a control device (6) which is configured to control an operation of the first refrigeration cycle circuit, an operation of the second refrigeration cycle circuit, and an operation of the heat source coolant circuit;
a first coolant-refrigerant heat exchanger (13) that performs a heat exchange between a coolant flowing in the heat source coolant circuit and a refrigerant flowing in the first refrigeration cycle circuit; and
a second coolant-refrigerant heat exchanger (14) that performs a heat exchange between the coolant flowing in the heat source coolant circuit and the refrigerant flowing in the second refrigeration cycle circuit, wherein
the first refrigeration cycle circuit forms a heat pump that pumps heat from air through the first exterior heat exchanger (15a),
the second refrigeration cycle circuit forms a heat pump that pumps heat from air through the second exterior heat exchanger (15b), and
the control device includes:
a first flow rate control unit (S42, S182) which is configured to compare a temperature of a coolant in the heat source coolant circuit with a temperature of a high-pressure gas refrigerant flowing in the first refrigeration cycle circuit when the first refrigeration cycle circuit performs a defrosting operation for defrosting in the first exterior heat exchanger, the first flow rate control unit being configured for controlling the heat source coolant circuit to cause the coolant of the heat source coolant circuit to flow in the first coolant-refrigerant heat exchanger when the control device determines that the first refrigeration cycle circuit is capable of absorbing heat; and
a second flow rate control unit (S52, S172) which is configured to compare the temperature of the coolant in the heat source coolant circuit with a temperature of a high-pressure gas refrigerant flowing in the second refrigeration cycle circuit when the second refrigeration cycle circuit performs a defrosting operation for defrosting in the second exterior heat exchanger, the second flow rate control unit being configured for controlling the heat source coolant circuit to cause the coolant of the heat source coolant circuit to flow in the second coolant-refrigerant heat exchanger when the control device determines that the second refrigeration cycle circuit is capable of absorbing heat; wherein
the first refrigeration cycle circuit includes a first compressor (9a) that compresses the refrigerant, a first interior heat exchanger (17a, 17a1, 17a2 17a3) that forms an evaporator exchanging heat with the air-conditioning air to cool the air-conditioning air, the first exterior heat exchanger (15a) that exchanges heat with the outside air, and a first electronic expansion valve (18a) that controls a flow rate of high pressure refrigerant to be introduced into the first exterior heat exchanger (15a),
the first refrigeration cycle circuit is configured to cause the refrigerant at high temperature and high pressure to flow into the first coolant-refrigerant heat exchanger (13) in which the coolant of the heat source coolant circuit flows,
the second refrigeration cycle circuit includes a second compressor (9b) that compresses the refrigerant, a second interior heat exchanger (17b, 17b1, 17b2, 17b3) that forms an evaporator exchanging heat with the air-conditioning air to cool the air-conditioning air, the second exterior heat exchanger (15b) that exchanges heat with the outside air, and a second electronic expansion valve (18b) that controls the flow rate of high pressure refrigerant to be introduced into the second exterior heat exchanger (15b), and
the second refrigeration cycle circuit is configured to cause the refrigerant at high temperature and high pressure to flow into the second coolant-refrigerant heat exchanger (14) in which the coolant of the heat source coolant circuit flows.

2. The refrigeration cycle device according to claim 1, further comprising:
an independent coolant circuit (43) which is configured to circulate the coolant through the first coolant-refrigerant heat exchanger and the second coolant-refrigerant heat exchanger separately and independently from the heat source coolant circuit;
an independent coolant pump (42) which is arranged to circulate the coolant in the independent coolant circuit when the independent coolant circuit is separated and independent from the heat source coolant circuit; and
a switching valve (7) which is arranged to control a flow of the coolant flowing from the heat source coolant circuit into the independent coolant circuit and is capable of separating the independent coolant circuit from the heat source coolant circuit, wherein
the control device (6) is configured to control an operation of the independent coolant pump, and an operation of the switching valve, and
the control device is configured to control the operation of the switching valve to separate the independent coolant circuit from the heat source coolant circuit, and controls the operation of the independent coolant pump to pump the coolant of the independent coolant circuit to the first coolant-refrigerant heat exchanger when the control device determines that the first refrigeration cycle circuit is capable of absorbing heat.

3. The refrigeration cycle device according to claim 1 or 2, wherein
the refrigeration cycle is configured such that when the first refrigeration cycle circuit performs the defrosting operation, the defrosting operation of the second refrigeration cycle circuit is prohibited, and a heat exchange between the second refrigeration cycle circuit and the heat source coolant circuit is performed.

4. The refrigeration cycle device according to any one of claims 1 to 3, wherein
the heat source coolant circuit includes an engine that is mountable in a vehicle as the heat source, a coolant pump (31) that circulates the coolant for cooling the engine, a burner (32) that combusts a fuel to raise the temperature of the coolant, a radiator (33) that radiates a heat of the coolant to an outside air, and the heater core (34) that performs a heat exchange between the coolant and the air-conditioning air flowing toward the vehicle interior.

5. The refrigeration cycle device according to any one of claims 1 to 4, further comprising:
a first upstream switching valve (7a) that is disposed on a coolant inflow side of the first coolant-refrigerant heat exchanger;
a first downstream switching valve (7b) that is disposed on a coolant outflow side of the first coolant-refrigerant heat exchanger;
a second upstream switching valve (7c) that is disposed on a coolant inflow side of the second coolant-refrigerant heat exchanger; and
a second downstream switching valve (7d) that is disposed on a coolant outflow side of the second coolant-refrigerant heat exchanger, wherein
the control device includes:
a parallel flow channel forming portion (S95, S105) that forms a parallel flow channel connecting the first coolant-refrigerant heat exchanger and the second coolant-refrigerant heat exchanger in parallel in flow of the coolant by switching operations of the first and second upstream switching valves and operations of the first and second downstream switching valves; and
a series flow channel forming portion (S92, S102) that forms a series flow channel connecting the first coolant-refrigerant heat exchanger and the second coolant-refrigerant heat exchanger in series in flow of the coolant by switching operations of the first and second upstream switching valves and operations of the first and second downstream switching valves.

6. The refrigeration cycle device according to claim 5, wherein
when the first refrigeration cycle circuit performs the defrosting operation and when the second refrigeration cycle circuit does not perform the defrosting operation, the series flow channel forming portion (S92) forms a series flow channel in which the second coolant-refrigerant heat exchanger is located on an upstream side of the first coolant-refrigerant heat exchanger, and
when the second refrigeration cycle circuit performs the defrosting operation, and the first refrigeration cycle circuit does not perform the defrosting operation, the series flow channel forming portion (S102) forms a series flow channel in which the first coolant-refrigerant heat exchanger is located on an upstream side of the second coolant-refrigerant heat exchanger.

7. The refrigeration cycle device according to claim 1, wherein
when the first refrigeration cycle circuit performs the defrosting operation, and when the second refrigeration cycle circuit does not perform the defrosting operation:
when the temperature of the high-pressure gas refrigerant in the first refrigeration cycle circuit is higher than the temperature of the coolant, the control device is configured to prevent a heat transfer between the coolant and the refrigerant of the first refrigeration cycle circuit; and
when the temperature of the high-pressure gas refrigerant in the first refrigeration cycle circuit is equal to or lower than the temperature of the coolant, the first flow rate control unit is configured to perform the heat transfer between the coolant and the refrigerant of the first refrigeration cycle circuit, and the control device is configured to heat the coolant via the second refrigeration cycle circuit.

8. The refrigeration cycle device according to claim 1, wherein
when the second refrigeration cycle circuit performs the defrosting operation, and when the first refrigeration cycle circuit does not perform the defrosting operation:
when the temperature of the high-pressure gas refrigerant in the second refrigeration cycle circuit is higher than the temperature of the coolant, the control device is configured to prevent a heat transfer between the coolant and the refrigerant of the second refrigeration cycle circuit; and
when the temperature of the high-pressure gas refrigerant in the second refrigeration cycle circuit is equal to or lower than the temperature of the coolant, the second flow rate control unit is configured to perform the heat transfer between the coolant and the refrigerant of the second refrigeration cycle circuit, and the control device is configured to heat the coolant via the first refrigeration cycle circuit.

9. The refrigeration cycle device according to claim 5, wherein
the series flow channel forming portion (S92, S102) includes:
a first series flow channel forming portion that sets a flow direction of the coolant flowing in series in the first coolant-refrigerant heat exchanger and the second coolant-refrigerant heat exchanger such that the coolant flows from the second coolant-refrigerant heat exchanger to the first coolant-refrigerant heat exchanger, by controlling the first and second upstream switching valves and the first and second downstream switching valves; and
a second series flow channel forming portion that sets a flow direction of the coolant flowing in series in the first coolant-refrigerant heat exchanger and the second coolant-refrigerant heat exchanger such that the coolant flows from the first coolant-refrigerant heat exchanger to the second coolant-refrigerant heat exchanger, by controlling the first and second upstream switching valves and the first and second downstream switching valves.

10. The refrigeration cycle device according to any one of claims 1 to 4, wherein
the first coolant-refrigerant heat exchanger and the second coolant-refrigerant heat exchanger are connected in series to form a series body (1314), and the series body receives the coolant from the heat source coolant circuit,
the refrigeration cycle device further comprising:
a series body upstream switching valve (7ac) that is disposed on an upstream side of the series body; and
a series body downstream switching valve (7bd) that is disposed on a downstream side of the series body, wherein
the control device includes:
a first series body flow channel forming portion (S141) that controls the series upstream switching valve and the series downstream switching valve to form a flow of the coolant in the series body from the second coolant-refrigerant heat exchanger to the first coolant-refrigerant heat exchanger; and
a second series body flow channel forming portion (S144) that controls the series upstream switching valve and the series downstream switching valve to form a flow of the coolant in the series body from the first coolant-refrigerant heat exchanger to the second coolant-refrigerant heat exchanger.

11. The refrigeration cycle device according to claim 10, further comprising an alternating flow channel forming portion (S142, S143, S145, S146) that switches a flow direction of the coolant flowing in the series body into an opposite direction alternately at predetermined time intervals.

12. The refrigeration cycle device according to claim 1, further comprising:
a first reheat core (17ah, 17ah1, 17ah2, 17ah3) that is disposed in the first refrigeration cycle circuit and reheats the air-conditioning air passing through the first interior heat exchanger by a heat of the coolant flowing in the heat source coolant circuit; and
a second reheat core (17bh, 17bh1, 17bh2, 17bh3) that is disposed in the second refrigeration cycle circuit and reheats the air-conditioning air passing through the second interior heat exchanger by a heat of the coolant flowing in the heat source coolant circuit.

13. The refrigeration cycle device according to claim 12, wherein
the first interior heat exchanger is one of a plurality of first interior heat exchangers forming an evaporator that cools the air-conditioning air by heat exchange with the air-conditioning air,
the second interior heat exchanger is one of a plurality of second interior heat exchangers configuring the evaporator that cools the air-conditioning air by heat exchange with the air-conditioning air,
the first reheat core is one of a plurality of first reheat cores that are disposed in the first refrigeration cycle circuit and reheat the air-conditioning air passing through the plurality of first interior heat exchangers by the heat of the coolant flowing in the heat source coolant circuit, and
the second reheat core is one of a plurality of second reheat cores that are disposed in the second refrigeration cycle circuit and reheat the air-conditioning air passing through the plurality of second interior heat exchangers by the heat of the coolant flowing in the heat source coolant circuit.

14. The refrigeration cycle device according to claim 12 or 13, further comprising:
a first module (17aM, 17aM1, 17aM2, 17aM3) that includes the first reheat core, the first interior heat exchanger, and a blower (17ahf) that blows the air into the interior heat exchanger; and
a second module (17bM, 17bM1, 17bM2, 17bM3) that includes the second reheat core, the second interior heat exchanger, and a blower (17bhf) that blows the air into the interior heat exchanger, wherein
the first module and the second module are to be disposed, in use, in a vehicle ceiling portion.

15. The refrigeration cycle device according to any one of claims 1 to 14, wherein each of the first refrigeration cycle circuit and the second refrigeration cycle circuit is a gas injection cycle.

## Patentansprüche

1. Kältekreislaufvorrichtung, mit:
einem ersten Kältekreislaufkreis (1), der einen ersten Außenwärmetauscher (15a) umfasst;
einem zweiten Kältekreislaufkreis (2), der einen zweiten Außenwärmetauscher (15b) umfasst;
einem Wärmequellenkühlmittelkreis (5), der eine Wärmequelle (3) und einen Heizerkern (34) umfasst, der die Wärmequelle (3) kühlt und eine in ein Fahrzeuginneres zu blasende Klimaanlagenluft heizt;
einer Steuervorrichtung (6), die dazu gestaltet ist, einen Betrieb des ersten Kältekreislaufkreises, einen Betrieb des zweiten Kältekreislaufkreises und einen Betrieb des Wärmequellenkühlmittelkreises zu steuern;
einem ersten Kühlmittel-Kältemittel-Wärmetauscher (13), der einen Wärmetausch zwischen einem in dem Wärmequellenkühlmittelkreis strömenden Kühlmittel und einem in dem ersten Kältekreislaufkreis strömenden Kältemittel durchführt; und
einem zweiten Kühlmittel-Kältemittel-Wärmetauscher (14), der einen Wärmetausch zwischen dem in dem Wärmequellenkühlmittelkreis strömenden Kühlmittel und dem in dem zweiten Kältekreislaufkreis strömenden Kältemittel durchführt, wobei
der erste Kältekreislaufkreis eine Wärmepumpe bildet, die Wärme von Luft durch den ersten Außenwärmetauscher (15a) pumpt,
der zweite Kältekreislaufkreis eine Wärmepumpe bildet, die Wärme von Luft durch den zweiten Außenwärmetauscher (15b) pumpt, und
die Steuervorrichtung umfasst:
eine erste Durchflusssteuereinheit (S42, S182), die dazu gestaltet ist, eine Temperatur eines Kühlmittels in dem Wärmequellenkühlmittelkreis mit einer Temperatur eines Hochdruckgaskältemittels zu vergleichen, das in dem ersten Kältekreislaufkreis strömt, wenn der erste Kältekreislaufkreis einen Enteisungsbetrieb zum Enteisen in dem ersten Außenwärmetauscher durchführt, wobei die erste Durchflusssteuereinheit zum Steuern des Wärmequellenkühlmittelkreises gestaltet ist, um das Kühlmittel des Wärmequellenkühlmittelkreises zu veranlassen, in den ersten Kühlmittel-Kältemittel-Wärmetauscher zu strömen, wenn die Steuervorrichtung bestimmt, dass der erste Kältekreislaufkreis in der Lage ist, Wärme aufzunehmen; und
eine zweite Durchflusssteuereinheit (S52, S172), die dazu gestaltet ist, die Temperatur des Kühlmittels in dem Wärmequellenkühlmittelkreis mit einer Temperatur eines Hochdruckgaskältemittels zu vergleichen, das in dem zweiten Kältekreislaufkreis strömt, wenn der zweite Kältekreislaufkreis einen Enteisungsbetrieb zum Enteisen in dem zweiten Außenwärmetauscher durchführt, wobei die zweite Durchflusssteuereinheit zum Steuern des Wärmequellenkühlmittelkreises gestaltet ist, um das Kühlmittel des Wärmequellenkühlmittelkreises zu veranlassen, in den zweiten Kühlmittel-Kältemittel-Wärmetauscher zu strömen, wenn die Steuervorrichtung bestimmt, dass der zweite Kältekreislaufkreis in der Lage ist, Wärme aufzunehmen; wobei
der erste Kältekreislaufkreis einen ersten Verdichter (9a), der das Kältemittel verdichtet, einen ersten Innenwärmetauscher (17a, 17a1, 17a2, 17a3), der einen Verdampfer bildet, der Wärme mit der Klimaanlagenluft tauscht, um die Klimaanlagenluft zu kühlen, den Wärme mit der Außenluft tauschenden ersten Außenwärmetauscher (15a) und ein erstes elektronisches Expansionsventil (18a) umfasst, das einen Durchfluss von in den ersten Außenwärmetauscher (15a) einzuleitendem Hochdruckgaskältemittel steuert,
der erste Kältekreislaufkreis dazu gestaltet ist, das Kältemittel mit hoher Temperatur und hohem Druck zu veranlassen, in den ersten Kühlmittel-Kältemittel-Wärmetauscher (13) zu strömen, in dem das Kühlmittel des Wärmequellenkühlmittelkreises strömt,
der zweite Kältekreislaufkreis einen zweiten Verdichter (9b), der das Kältemittel verdichtet, einen zweiten Innenwärmetauscher (17b, 17b1, 17b2, 17b3), der einen Verdampfer bildet, der Wärme mit der Klimaanlagenluft tauscht, um die Klimaanlagenluft zu kühlen, den Wärme mit der Außenluft tauschenden zweiten Außenwärmetauscher (15b) und ein zweites elektronisches Expansionsventil (18b) umfasst, das den Durchfluss von in den zweiten Außenwärmetauscher (15b) einzuleitendem Hochdruckgaskältemittel steuert, und
der zweite Kältekreislaufkreis dazu gestaltet ist, das Kältemittel mit hoher Temperatur und hohem Druck zu veranlassen, in den zweiten Kühlmittel-Kältemittel-Wärmetauscher (14) zu strömen, in dem das Kühlmittel des Wärmequellenkühlmittelkreises strömt.

2. Kältekreislaufvorrichtung gemäß Anspruch 1, ferner mit:
einem unabhängigen Kühlmittelkreis (43), der dazu gestaltet ist, das Kühlmittel von dem Wärmequellenkühlmittelkreis getrennt und unabhängig durch den ersten Kühlmittel-Kältemittel-Wärmetauscher und den zweiten Kühlmittel-Kältemittel-Wärmetauscher zu zirkulieren;
einer unabhängigen Kühlmittelpumpe (42), die dazu angeordnet ist, das Kühlmittel in dem unabhängigen Kühlmittelkreis zu zirkulieren, wenn der unabhängige Kühlmittelkreis von dem Wärmequellenkühlmittelkreis getrennt und unabhängig ist; und
einem Umschaltventil (7), das dazu angeordnet ist, eine Strömung des Kühlmittels zu steuern, das von dem Wärmequellenkühlmittelkreis in den unabhängigen Kühlmittelkreis strömt, und in der Lage ist, den unabhängigen Kühlmittelkreis von dem Wärmequellenkühlmittelkreis zu trennen, wobei
die Steuervorrichtung (6) dazu gestaltet ist, einen Betrieb der unabhängigen Kühlmittelpumpe und einen Betrieb des Umschaltventils zu steuern, und
die Steuervorrichtung dazu gestaltet ist, den Betrieb des Umschaltventils zu steuern, um den unabhängigen Kühlmittelkreis von dem Wärmequellenkühlmittelkreis zu trennen, und den Betrieb der unabhängigen Kühlmittelpumpe steuert, um das Kühlmittel des unabhängigen Kühlmittelkreises zu dem ersten Kühlmittel-Kältemittel-Wärmetauscher zu pumpen, wenn die Steuervorrichtung bestimmt, dass der erste Kältekreislaufkreis in der Lage ist, Wärme aufzunehmen.

3. Kältekreislaufvorrichtung gemäß Anspruch 1 oder 2, wobei
der Kältekreislauf so gestaltet ist, dass, wenn der erste Kältekreislaufkreis den Enteisungsbetrieb durchführt, der Enteisungsbetrieb des zweiten Kältekreislaufkreises untersagt ist und ein Wärmetausch zwischen dem zweiten Kältekreislaufkreis und dem Wärmequellenkühlmittelkreis durchgeführt wird.

4. Kältekreislaufvorrichtung gemäß einem der Ansprüche 1 bis 3, wobei
der Wärmequellenkühlmittelkreis einen in einem Fahrzeug montierbaren Motor als die Wärmequelle, eine das Kühlmittel zum Kühlen des Motors zirkulierende Kühlmittelpumpe (31), einen Brenner (32), der einen Kraftstoff verbrennt, um die Temperatur des Kühlmittels zu erhöhen, einen Kühler (33), der eine Wärme des Kühlmittels an eine Außenluft abstrahlt, und den Heizerkern (34) umfasst, der einen Wärmetausch zwischen dem Kühlmittel und der Klimaanlagenluft durchführt, die in Richtung des Fahrzeuginneren strömt.

5. Kältekreislaufvorrichtung gemäß einem der Ansprüche 1 bis 4, ferner mit:
einem ersten stromaufwärtigen Umschaltventil (7a), das an einer Kühlmitteleinströmseite des ersten Kühlmittel-Kältemittel-Wärmetauschers vorgesehen ist;
einem ersten stromabwärtigen Umschaltventil (7b), das an einer Kühlmittelausströmseite des ersten Kühlmittel-Kältemittel-Wärmetauschers vorgesehen ist;
einem zweiten stromaufwärtigen Umschaltventil (7c), das an einer Kühlmitteleinströmseite des zweiten Kühlmittel-Kältemittel-Wärmetauschers vorgesehen ist; und
einem zweiten stromabwärtigen Umschaltventil (7d), das an einer Kühlmittelausströmseite des zweiten Kühlmittel-Kältemittel-Wärmetauschers vorgesehen ist, wobei
die Steuervorrichtung umfasst:
einen Parallelströmungskanalbildungsabschnitt (S95, S105), der einen Parallelströmungskanal bildet, der den ersten Kühlmittel-Kältemittel-Wärmetauscher und den zweiten Kühlmittel-Kältemittel-Wärmetauscher durch Umschalten von Betrieben der ersten und zweiten stromaufwärtigen Umschaltventile und Betrieben der ersten und zweiten stromabwärtigen Umschaltventile in Parallelströmung des Kühlmittels verbindet; und
einen Reihenströmungskanalbildungsabschnitt (S92, S102), der einen Reihenströmungskanal bildet, der den ersten Kühlmittel-Kältemittel-Wärmetauscher und den zweiten Kühlmittel-Kältemittel-Wärmetauscher durch Umschalten von Betrieben der ersten und zweiten stromaufwärtigen Umschaltventile und Betrieben der ersten und zweiten stromabwärtigen Umschaltventile in Reihenströmung des Kühlmittels verbindet.

6. Kältekreislaufvorrichtung gemäß Anspruch 5, wobei,
wenn der erste Kältekreislaufkreis den Enteisungsbetrieb durchführt und wenn der zweite Kältekreislaufkreis den Enteisungsbetrieb nicht durchführt, der Reihenströmungskanalbildungsabschnitt (S92) einen Reihenströmungskanal bildet, bei dem der zweite Kühlmittel-Kältemittel-Wärmetauscher an einer stromaufwärtigen Seite des ersten Kühlmittel-Kältemittel-Wärmetauschers liegt, und
wenn der zweite Kältekreislaufkreis den Enteisungsbetrieb durchführt und wenn der erste Kältekreislaufkreis den Enteisungsbetrieb nicht durchführt, der Reihenströmungskanalbildungsabschnitt (S102) einen Reihenströmungskanal bildet, bei dem der erste Kühlmittel-Kältemittel-Wärmetauscher an einer stromaufwärtigen Seite des zweiten Kühlmittel-Kältemittel-Wärmetauschers liegt.

7. Kältekreislaufvorrichtung gemäß Anspruch 1, wobei,
wenn der erste Kältekreislaufkreis den Enteisungsbetrieb durchführt und wenn der zweite Kältekreislaufkreis den Enteisungsbetrieb nicht durchführt:
wenn die Temperatur des Hochdruckgaskältemittels in dem ersten Kältekreislaufkreis höher als die Temperatur des Kühlmittels ist, die Steuervorrichtung dazu gestaltet ist, eine Wärmeübertragung zwischen dem Kühlmittel und dem Kältemittel des ersten Kältekreislaufkreises zu verhindern; und
wenn die Temperatur des Hochdruckgaskältemittels in dem ersten Kältekreislaufkreis gleich der oder kleiner als die Temperatur des Kühlmittels ist, die erste Durchflusssteuereinheit dazu gestaltet ist, die Wärmeübertragung zwischen dem Kühlmittel und dem Kältemittel des ersten Kältekreislaufkreises durchzuführen, und die Steuervorrichtung dazu gestaltet ist, das Kühlmittel über den zweiten Kältekreislaufkreis zu heizen.

8. Kältekreislaufvorrichtung gemäß Anspruch 1, wobei,
wenn der zweite Kältekreislaufkreis den Enteisungsbetrieb durchführt und wenn der erste Kältekreislaufkreis den Enteisungsbetrieb nicht durchführt:
wenn die Temperatur des Hochdruckgaskältemittels in dem zweiten Kältekreislaufkreis höher als die Temperatur des Kühlmittels ist, die Steuervorrichtung dazu gestaltet ist, eine Wärmeübertragung zwischen dem Kühlmittel und dem Kältemittel des zweiten Kältekreislaufkreises zu verhindern; und
wenn die Temperatur des Hochdruckgaskältemittels in dem zweiten Kältekreislaufkreis gleich der oder kleiner als die Temperatur des Kühlmittels ist, die zweite Durchflusssteuereinheit dazu gestaltet ist, die Wärmeübertragung zwischen dem Kühlmittel und dem Kältemittel des zweiten Kältekreislaufkreises durchzuführen, und die Steuervorrichtung dazu gestaltet ist, das Kühlmittel über den ersten Kältekreislaufkreis zu heizen.

9. Kältekreislaufvorrichtung gemäß Anspruch 5, wobei der Reihenströmungskanalbildungsabschnitt (S92, S102) umfasst:
einen ersten Reihenströmungskanalbildungsabschnitt, der eine Strömungsrichtung des in Reihe in dem ersten Kühlmittel-Kältemittel-Wärmetauscher und dem zweiten Kühlmittel-Kältemittel-Wärmetauscher strömenden Kühlmittels durch Steuern der ersten und zweiten stromaufwärtigen Umschaltventile und der ersten und zweiten stromabwärtigen Umschaltventile so festlegt, dass das Kühlmittel von dem zweiten Kühlmittel-Kältemittel-Wärmetauscher zu dem ersten Kühlmittel-Kältemittel-Wärmetauscher strömt; und
einen zweiten Reihenströmungskanalbildungsabschnitt, der eine Strömungsrichtung des in Reihe in dem ersten Kühlmittel-Kältemittel-Wärmetauscher und dem zweiten Kühlmittel-Kältemittel-Wärmetauscher strömenden Kühlmittels durch Steuern der ersten und zweiten stromaufwärtigen Umschaltventile und der ersten und zweiten stromabwärtigen Umschaltventile so festlegt, dass das Kühlmittel von dem ersten Kühlmittel-Kältemittel-Wärmetauscher zu dem zweiten Kühlmittel-Kältemittel-Wärmetauscher strömt.

10. Kältekreislaufvorrichtung gemäß einem der Ansprüche 1 bis 4, wobei
der erste Kühlmittel-Kältemittel-Wärmetauscher und der zweite Kühlmittel-Kältemittel-Wärmetauscher in Reihe verbunden sind, um einen Reihenkörper (1314) zu bilden, und der Reihenkörper das Kühlmittel von dem Wärmequellenkühlmittelkreis empfängt,
wobei die Kältekreislaufvorrichtung ferner aufweist:
ein reihenkörperstromaufwärtiges Umschaltventil (7ac), das an einer stromaufwärtigen Seite des Reihenkörpers vorgesehen ist; und
ein reihenkörperstromabwärtiges Umschaltventil (7bd), das an einer stromabwärtigen Seite des Reihenkörpers vorgesehen ist, wobei
die Steuervorrichtung umfasst:
einen ersten Reihenkörperströmungskanalbildungsabschnitt (S141), der das reihenkörperstromaufwärtige Umschaltventil und das reihenkörperstromabwärtige Umschaltventil steuert, um eine Strömung des Kühlmittels in dem Reihenkörper von dem zweiten Kühlmittel-Kältemittel-Wärmetauscher zu dem ersten Kühlmittel-Kältemittel-Wärmetauscher zu bilden; und
einen zweiten Reihenkörperströmungskanalbildungsabschnitt (S144), der das reihenkörperstromaufwärtige Umschaltventil und das reihenkörperstromabwärtige Umschaltventil steuert, um eine Strömung des Kühlmittels in dem Reihenkörper von dem ersten Kühlmittel-Kältemittel-Wärmetauscher zu dem zweiten Kühlmittel-Kältemittel-Wärmetauscher zu bilden.

11. Kältekreislaufvorrichtung gemäß Anspruch 10, ferner mit einem Alternierströmungskanalbildungsabschnitt (S142, S143, S145, S146), der eine Strömungsrichtung des in dem Reihenkörper strömenden Kühlmittels alternierend an vorbestimmten Zeitintervallen in eine entgegengesetzte Richtung umschaltet.

12. Kältekreislaufvorrichtung gemäß Anspruch 1, ferner mit:
einem ersten Wiederheizkern (17ah, 17ah1, 17ah2, 17ah3), der in dem ersten Kältekreislaufkreis vorgesehen ist und die durch den ersten Innenwärmetauscher tretende Klimaanlagenluft durch eine Wärme des in dem Wärmequellenkühlmittelkreis strömenden Kühlmittels wieder heizt; und
einem zweiten Wiederheizkern (17bh, 17bh1, 17bh2, 17bh3), der in dem zweiten Kältekreislaufkreis vorgesehen ist und die durch den zweiten Innenwärmetauscher tretende Klimaanlagenluft durch eine Wärme des in dem Wärmequellenkühlmittelkreis strömenden Kühlmittels wieder heizt.

13. Kältekreislaufvorrichtung gemäß Anspruch 12, wobei
der erste Innenwärmetauscher einer von einer Vielzahl erster Innenwärmetauscher ist, die einen Verdampfer bilden, der die Klimaanlagenluft durch Wärmetausch mit der Klimaanlagenluft kühlt,
der zweite Innenwärmetauscher einer von einer Vielzahl zweiter Innenwärmetauscher ist, die den Verdampfer gestalten, der die Klimaanlagenluft durch Wärmetausch mit der Klimaanlagenluft kühlt,
der erste Wiederheizkern einer von einer Vielzahl erster Wiederheizkerne ist, die in dem ersten Kältekreislaufkreis vorgesehen sind und die durch die Vielzahl erster Innenwärmetauscher tretende Klimaanlagenluft durch die Wärme des in dem Wärmequellenkühlmittelkreis strömenden Kühlmittels wieder heizen, und
der zweite Wiederheizkern einer von einer Vielzahl zweiter Wiederheizkerne ist, die in dem zweiten Kältekreislaufkreis vorgesehen sind und die durch die Vielzahl zweiter Innenwärmetauscher tretende Klimaanlagenluft durch die Wärme des in dem Wärmequellenkühlmittelkreis strömenden Kühlmittels wieder heizen.

14. Kältekreislaufvorrichtung gemäß Anspruch 12 oder 13, ferner mit:
einem ersten Modul (17aM, 17aM1, 17aM2, 17aM3), das den ersten Wiederheizkern, den ersten Innenwärmetauscher und ein Gebläse (17ahf) umfasst, das die Luft in den Innenwärmetauscher bläst; und
einem zweiten Modul (17bM, 17bM1, 17bM2, 17bM3), das den zweiten Wiederheizkern, den zweiten Innenwärmetauscher und ein Gebläse (17bhf) umfasst, das die Luft in den Innenwärmetauscher bläst, wobei
das erste Modul und das zweite Modul in Verwendung in einem Fahrzeugdeckenabschnitt vorzusehen sind.

15. Kältekreislaufvorrichtung gemäß einem der Ansprüche 1 bis 14, wobei sowohl der erste Kältekreislaufkreis als auch der zweite Kältekreislaufkreis ein Gaseinbringungskreislauf ist.

## Revendications

1. Dispositif de cycle de réfrigération comprenant :
un premier circuit de cycle de réfrigération (1) comportant un premier échangeur de chaleur extérieur (15a) ;
un second circuit de cycle de réfrigération (2) comportant un second échangeur de chaleur extérieur (15b) ;
un circuit de liquide de refroidissement de source de chaleur (5) comportant une source de chaleur (3) et un noyau d'élément chauffant (34) qui refroidit la source de chaleur (3) et qui chauffe un air de climatisation devant être soufflé dans un habitacle de véhicule ;
un dispositif de commande (6) qui est configuré pour commander un fonctionnement du premier circuit de cycle de réfrigération, un fonctionnement du second circuit de cycle de réfrigération, et un fonctionnement du circuit de liquide de refroidissement de source de chaleur ;
un premier échangeur de chaleur de liquide de refroidissement-réfrigérant (13) qui effectue un échange de chaleur entre un liquide de refroidissement s'écoulant dans le circuit de liquide de refroidissement de source de chaleur, et un réfrigérant s'écoulant dans le premier circuit de cycle de réfrigération ; et
un second échangeur de chaleur de liquide de refroidissement-réfrigérant (14) qui effectue un échange de chaleur entre le liquide de refroidissement s'écoulant dans le circuit de liquide de refroidissement de source de chaleur, et le réfrigérant s'écoulant dans le second circuit de cycle de réfrigération, dans lequel
le premier circuit de cycle de réfrigération forme une pompe à chaleur qui pompe la chaleur de l'air à travers le premier échangeur de chaleur extérieur (15a),
le second circuit de cycle de réfrigération forme une pompe à chaleur qui pompe la chaleur de l'air à travers le second échangeur de chaleur extérieur (15b), et
le dispositif de commande comporte :
une première unité de commande de débit (S42, S182) qui est configurée pour comparer une température d'un liquide de refroidissement dans le circuit de liquide de refroidissement de source de chaleur avec une température d'un réfrigérant gazeux à haute pression s'écoulant dans le premier circuit de cycle de réfrigération, lorsque le premier circuit de cycle de réfrigération effectue une opération de dégivrage pour un dégivrage dans le premier échangeur de chaleur extérieur, la première unité de commande de débit étant configurée pour commander le circuit de liquide de refroidissement de source de chaleur pour amener le liquide de refroidissement du circuit de liquide de refroidissement de source de chaleur à s'écouler dans le premier échangeur de chaleur de liquide de refroidissement-réfrigérant, lorsque le dispositif de commande détermine que le premier circuit de cycle de réfrigération est capable d'absorber de la chaleur ; et
une seconde unité de commande de débit (S52, S172) qui est configurée pour comparer la température du liquide de refroidissement dans le circuit de liquide de refroidissement de source de chaleur avec une température d'un réfrigérant gazeux à haute pression s'écoulant dans le second circuit de cycle de réfrigération, lorsque le second circuit de cycle de réfrigération effectue une opération de dégivrage pour un dégivrage dans le second échangeur de chaleur extérieur, la seconde unité de commande de débit étant configurée pour commander le circuit de liquide de refroidissement de source de chaleur pour amener le liquide de refroidissement du circuit de liquide de refroidissement de source de chaleur à s'écouler dans le second échangeur de chaleur de liquide de refroidissement-réfrigérant, lorsque le dispositif de commande détermine que le second circuit de cycle de réfrigération est capable d'absorber de la chaleur ;
dans lequel
le premier circuit de cycle de réfrigération comporte un premier compresseur (9a) qui comprime le réfrigérant, un premier échangeur de chaleur intérieur (17a, 17a1, 17a2, 17a3) qui forme un évaporateur échangeant de la chaleur avec l'air de climatisation pour refroidir l'air de climatisation, le premier échangeur de chaleur extérieur (15a) qui échange de la chaleur avec l'air extérieur, et un premier détendeur électronique (18a) qui commande un débit d'un réfrigérant à haute pression devant être introduit dans le premier échangeur de chaleur extérieur (15a),
le premier circuit de cycle de réfrigération est configuré pour amener le réfrigérant à haute température et à haute pression à s'écouler dans le premier échangeur de chaleur de liquide de refroidissement-réfrigérant (13) dans lequel s'écoule le liquide de refroidissement du circuit de liquide de refroidissement de source de chaleur,
le second circuit de cycle de réfrigération comporte un second compresseur (9b) qui comprime le réfrigérant, un second échangeur de chaleur intérieur (17b, 17b1, 17b2, 17b3) qui forme un évaporateur échangeant de la chaleur avec l'air de climatisation pour refroidir l'air de climatisation, le second échangeur de chaleur extérieur (15b) qui échange de la chaleur avec l'air extérieur, et un second détendeur électronique (18b) qui commande le débit d'un réfrigérant à haute pression devant être introduit dans le second échangeur de chaleur extérieur (15b), et
le second circuit de cycle de réfrigération est configuré pour amener le réfrigérant à haute température et à haute pression à s'écouler dans le second échangeur de chaleur de liquide de refroidissement-réfrigérant (14) dans lequel s'écoule le liquide de refroidissement du circuit de liquide de refroidissement de source de chaleur.

2. Dispositif de cycle de réfrigération selon la revendication 1, comprenant en outre :
un circuit de liquide de refroidissement indépendant (43) qui est configuré pour faire circuler le liquide de refroidissement à travers le premier échangeur de chaleur de liquide de refroidissement-réfrigérant et le second échangeur de chaleur de liquide de refroidissement-réfrigérant séparément et indépendamment du circuit de liquide de refroidissement de source de chaleur ;
une pompe de liquide de refroidissement indépendante (42) qui est agencée pour faire circuler le liquide de refroidissement dans le circuit de liquide de refroidissement indépendant lorsque le circuit de liquide de refroidissement indépendant est séparé et indépendant du circuit de liquide de refroidissement de source de chaleur ; et
une soupape de commutation (7) qui est agencée pour commander un écoulement du liquide de refroidissement s'écoulant à partir du circuit de liquide de refroidissement de source de chaleur dans le circuit de liquide de refroidissement indépendant, et qui est capable de séparer le circuit de liquide de refroidissement indépendant du circuit de liquide de refroidissement de source de chaleur, dans lequel
le dispositif de commande (6) est configuré pour commander un fonctionnement de la pompe de liquide de refroidissement indépendante, et un fonctionnement de la soupape de commutation, et
le dispositif de commande est configuré pour commander le fonctionnement de la soupape de commutation pour séparer le circuit de liquide de refroidissement indépendant du circuit de liquide de refroidissement de source de chaleur, et commande le fonctionnement de la pompe de liquide de refroidissement indépendante pour pomper le liquide de refroidissement du circuit de liquide de refroidissement indépendant vers le premier échangeur de chaleur de liquide de refroidissement-réfrigérant, lorsque le dispositif de commande détermine que le premier circuit de cycle de réfrigération est capable d'absorber de la chaleur.

3. Dispositif de cycle de réfrigération selon la revendication 1 ou 2, dans lequel
le cycle de réfrigération est configuré de sorte que, lorsque le premier circuit de cycle de réfrigération effectue l'opération de dégivrage, l'opération de dégivrage du second circuit de cycle de réfrigération est interdite, et un échange de chaleur entre le second circuit de cycle de réfrigération et le circuit de liquide de refroidissement de source de chaleur est effectué.

4. Dispositif de cycle de réfrigération selon l'une quelconque des revendications 1 à 3, dans lequel
le circuit de liquide de refroidissement de source de chaleur comporte un moteur qui peut être monté dans un véhicule comme source de chaleur, une pompe de liquide de refroidissement (31) qui fait circuler le liquide de refroidissement pour refroidir le moteur, un brûleur (32) qui brûle un carburant pour augmenter la température du liquide de refroidissement, un radiateur (33) qui rayonne une chaleur du liquide de refroidissement vers l'air extérieur, et le noyau d'élément chauffant (34) qui effectue un échange de chaleur entre le liquide de refroidissement et l'air de climatisation s'écoulant vers l'habitacle de véhicule.

5. Dispositif de cycle de réfrigération selon l'une quelconque des revendications 1 à 4, comprenant en outre :
une première soupape de commutation amont (7a) qui est disposée sur un côté entrée de liquide de refroidissement du premier échangeur de chaleur de liquide de refroidissement-réfrigérant ;
une première soupape de commutation aval (7b) qui est disposée sur un côté sortie de liquide de refroidissement du premier échangeur de chaleur de liquide de refroidissement-réfrigérant ;
une seconde soupape de commutation amont (7c) qui est disposée sur un côté entrée de liquide de refroidissement du second échangeur de chaleur de liquide de refroidissement-réfrigérant ; et
une seconde soupape de commutation aval (7d) qui est disposée sur un côté sortie de liquide de refroidissement du second échangeur de chaleur de liquide de refroidissement-réfrigérant, dans lequel
le dispositif de commande comporte :
une partie formant canal d'écoulement en parallèle (S95, S105) qui forme un canal d'écoulement en parallèle reliant le premier échangeur de chaleur de liquide de refroidissement-réfrigérant et le second échangeur de chaleur de liquide de refroidissement-réfrigérant en parallèle dans l'écoulement du liquide de refroidissement, en commutant les fonctionnements des première et seconde soupapes de commutation amont et les fonctionnements des première et seconde soupapes de commutation aval ; et
une partie formant canal d'écoulement en série (S92, S102) qui forme un canal d'écoulement en série reliant le premier échangeur de chaleur de liquide de refroidissement-réfrigérant et le second échangeur de chaleur de liquide de refroidissement-réfrigérant en série dans l'écoulement du liquide de refroidissement, en commutant les fonctionnements des première et seconde soupapes de commutation amont et les fonctionnements des première et seconde soupapes de commutation aval.

6. Dispositif de cycle de réfrigération selon la revendication 5, dans lequel
lorsque le premier circuit de cycle de réfrigération effectue l'opération de dégivrage, et lorsque le second circuit de cycle de réfrigération n'effectue pas l'opération de dégivrage, la partie formant canal d'écoulement en série (S92) forme un canal d'écoulement en série dans lequel le second échangeur de chaleur de liquide de refroidissement-réfrigérant est situé sur un côté amont du premier échangeur de chaleur de liquide de refroidissement-réfrigérant, et
lorsque le second circuit de cycle de réfrigération effectue l'opération de dégivrage, et que le premier circuit de cycle de réfrigération n'effectue pas l'opération de dégivrage, la partie formant canal d'écoulement en série (S102) forme un canal d'écoulement en série dans lequel le premier échangeur de chaleur de liquide de refroidissement-réfrigérant est situé sur un côté amont du second échangeur de chaleur de liquide de refroidissement-réfrigérant.

7. Dispositif de cycle de réfrigération selon la revendication 1, dans lequel
lorsque le premier circuit de cycle de réfrigération effectue l'opération de dégivrage, et lorsque le second circuit de cycle de réfrigération n'effectue pas l'opération de dégivrage :
lorsque la température du réfrigérant gazeux à haute pression dans le premier circuit de cycle de réfrigération est supérieure à la température du liquide de refroidissement, le dispositif de commande est configuré pour empêcher un transfert de chaleur entre le liquide de refroidissement et le réfrigérant du premier circuit de cycle de réfrigération ; et
lorsque la température du réfrigérant gazeux à haute pression dans le premier circuit de cycle de réfrigération est égale ou inférieure à la température du liquide de refroidissement, la première unité de commande de débit est configurée pour effectuer le transfert de chaleur entre le liquide de refroidissement et le réfrigérant du premier circuit de cycle de réfrigération, et le dispositif de commande est configuré pour chauffer le liquide de refroidissement via le second circuit de cycle de réfrigération.

8. Dispositif de cycle de réfrigération selon la revendication 1, dans lequel
lorsque le second circuit de cycle de réfrigération effectue l'opération de dégivrage, et lorsque le premier circuit de cycle de réfrigération n'effectue pas l'opération de dégivrage :
lorsque la température du réfrigérant gazeux à haute pression dans le second circuit de cycle de réfrigération est supérieure à la température du liquide de refroidissement, le dispositif de commande est configuré pour empêcher un transfert de chaleur entre le liquide de refroidissement et le réfrigérant du second circuit de cycle de réfrigération ; et
lorsque la température du réfrigérant gazeux à haute pression dans le second circuit de cycle de réfrigération est égale ou inférieure à la température du liquide de refroidissement, la seconde unité de commande de débit est configurée pour effectuer le transfert de chaleur entre le liquide de refroidissement et le réfrigérant du second circuit de cycle de réfrigération, et le dispositif de commande est configuré pour chauffer le liquide de refroidissement via le premier circuit de cycle de réfrigération.

9. Dispositif de cycle de réfrigération selon la revendication 5, dans lequel
la partie formant canal d'écoulement en série (S92, S102) comporte :
une première partie formant canal d'écoulement en série qui définit une direction d'écoulement du liquide de refroidissement s'écoulant en série dans le premier échangeur de chaleur de liquide de refroidissement-réfrigérant et dans le second échangeur de chaleur de liquide de refroidissement-réfrigérant, de sorte que le liquide de refroidissement s'écoule du second échangeur de chaleur de liquide de refroidissement-réfrigérant au premier échangeur de chaleur de liquide de refroidissement-réfrigérant, en commandant les première et seconde soupapes de commutation amont et les première et seconde soupapes de commutation aval ; et
une seconde partie formant canal d'écoulement en série qui définit une direction d'écoulement du liquide de refroidissement s'écoulant en série dans le premier échangeur de chaleur de liquide de refroidissement-réfrigérant et dans le second échangeur de chaleur de liquide de refroidissement-réfrigérant, de sorte que le liquide de refroidissement s'écoule du premier échangeur de chaleur de liquide de refroidissement-réfrigérant au second échangeur de chaleur de liquide de refroidissement-réfrigérant, en commandant les première et seconde soupapes de commutation amont et les première et seconde soupapes de commutation aval.

10. Dispositif de cycle de réfrigération selon l'une quelconque des revendications 1 à 4, dans lequel
le premier échangeur de chaleur de liquide de refroidissement-réfrigérant et le second échangeur de chaleur de liquide de refroidissement-réfrigérant sont reliés en série pour former un corps en série (1314), et le corps en série reçoit le liquide de refroidissement à partir du circuit de liquide de refroidissement de source de chaleur,
le dispositif de cycle de réfrigération comprenant en outre :
une soupape de commutation amont de corps en série (7ac) qui est disposée sur un côté amont du corps en série ; et
une soupape de commutation aval de corps en série (7bd) qui est disposée sur un côté aval du corps en série, dans lequel
le dispositif de commande comporte :
une première partie formant canal d'écoulement de corps en série (S141) qui commande la soupape de commutation amont en série et la soupape de commutation aval en série pour former un écoulement du liquide de refroidissement dans le corps en série, du second échangeur de chaleur de liquide de refroidissement-réfrigérant au premier échangeur de chaleur de liquide de refroidissement-réfrigérant ; et
une seconde partie formant canal d'écoulement de corps en série (S144) qui commande la soupape de commutation amont en série et la soupape de commutation aval en série pour former un écoulement du liquide de refroidissement dans le corps en série, du premier échangeur de chaleur de liquide de refroidissement-réfrigérant au second échangeur de chaleur de liquide de refroidissement-réfrigérant.

11. Dispositif de cycle de réfrigération selon la revendication 10, comprenant en outre une partie formant canal d'écoulement alternatif (S142, S143, S145, S146) qui commute une direction d'écoulement du liquide de refroidissement s'écoulant alternativement dans le corps en série dans une direction opposée à des intervalles de temps prédéterminés.

12. Dispositif de cycle de réfrigération selon la revendication 1, comprenant en outre :
un premier noyau de réchauffage (17ah, 17ah1, 17ah2, 17ah3) qui est disposé dans le premier circuit de cycle de réfrigération, et qui réchauffe l'air de climatisation traversant le premier échangeur de chaleur intérieur par la chaleur du liquide de refroidissement s'écoulant dans le circuit de liquide de refroidissement de source de chaleur ; et
un second noyau de réchauffage (17bh, 17bh1, 17bh2, 17bh3) qui est disposé dans le second circuit de cycle de réfrigération, et qui réchauffe l'air de climatisation traversant le second échangeur de chaleur intérieur par la chaleur du liquide de refroidissement s'écoulant dans le circuit de liquide de refroidissement de source de chaleur.

13. Dispositif de cycle de réfrigération selon la revendication 12, dans lequel
le premier échangeur de chaleur intérieur est l'un d'une pluralité de premiers échangeurs de chaleur intérieurs formant un évaporateur qui refroidit l'air de climatisation par échange de chaleur avec l'air de climatisation,
le second échangeur de chaleur intérieur est l'un d'une pluralité de seconds échangeurs de chaleur intérieurs configurant l'évaporateur qui refroidit l'air de climatisation par échange de chaleur avec l'air de climatisation,
le premier noyau de réchauffage est l'un d'une pluralité de premiers noyaux de réchauffage qui sont disposés dans le premier circuit de cycle de réfrigération, et qui réchauffent l'air de climatisation traversant la pluralité de premiers échangeurs de chaleur intérieurs par la chaleur du liquide de refroidissement s'écoulant dans le circuit de liquide de refroidissement de source de chaleur, et
le second noyau de réchauffage est l'un d'une pluralité de seconds noyaux de réchauffage qui sont disposés dans le second circuit de cycle de réfrigération, et qui réchauffent l'air de climatisation traversant la pluralité de seconds échangeurs de chaleur intérieurs par la chaleur du liquide de refroidissement s'écoulant dans le circuit de liquide de refroidissement de source de chaleur.

14. Dispositif de cycle de réfrigération selon la revendication 12 ou 13, comprenant en outre :
un premier module (17aM, 17aM1, 17aM2, 17aM3) qui comporte le premier noyau de réchauffage, le premier échangeur de chaleur intérieur, et une soufflante (17ahf) qui souffle l'air dans l'échangeur de chaleur intérieur ; et
un second module (17bM, 17bM1, 17bM2, 17bM3) qui comporte le second noyau de réchauffage, le second échangeur de chaleur intérieur, et une soufflante (17bhf) qui souffle l'air dans l'échangeur de chaleur intérieur, dans lequel
le premier module et le second module doivent être disposés, en cours d'utilisation, dans une partie de plafond de véhicule.

15. Dispositif de cycle de réfrigération selon l'une quelconque des revendications 1 à 14, dans lequel chacun parmi le premier circuit de cycle de réfrigération et le second circuit de cycle de réfrigération est un cycle d'injection de gaz.
